(19) Europäisches Patentamt
European Patent Office
Office européen des brevets

(11) **EP 2 421 142 A1**

(12) **EUROPÄISCHE PATENTANMELDUNG**

(43) Veröffentlichungstag:
**22.02.2012 Patentblatt 2012/08**

(51) Int Cl.:
*H02M 7/5387* (2007.01)    *H02J 5/00* (2006.01)

(21) Anmeldenummer: **09015465.9**

(22) Anmeldetag: **15.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **29.12.2008 DE 102008063201**

(71) Anmelder: **Weinmann, Martin**
**88339 Bad Waldsee (DE)**

(72) Erfinder: **Weinmann, Martin**
**88339 Bad Waldsee (DE)**

Bemerkungen:
Die Patentansprüche wurden nach dem Anmeldetag eingereicht (R. 68(4) EPÜ).

(54) **Verfahren und Schaltungsanordnung zur Speisung des Spannungszwischenkreises eines Wechselrichters**

(57)     Verfahren mit daraus abgeleiteten Schaltungsanordnungen zur ableitstromarmen Speisung des Spannungszwischenkreises eines netzgekoppelten Solarwechselrichters.

Mit diesem Verfahren, welches insbesondere auch für Wechselrichter zur 3-phasigen Netzeinspeisung geeignet ist, kann das Spannungspotenzial der Solarmodule gegenüber Erde in der weiße gesteuert werden, dass einerseits die kapazitiven Ableitströme gegenüber Erde minimiert werden, als auch die Polarität gegenüber dem Erdleiterpotenzial einstellbar ist.

Der Wechselrichter (IN) speist in ein Wechselspannungsnetz (GD) mit Neutralleiterbezug (N) ein und wird über die als erfinderisch vorgeschlagene Koppelschaltung (LK) aus dem Solargenerator (SR) gespeist. Der Wechselrichter (IN) mit der 3-phasigen Brücke mit den Schaltern (S1 ... S6) sowie den Freilaufdioden (D1 ... D6) speist über ein symmetrisches LC-Filter ($L_U$, $L_V$, $L_W$, $C_{UN'}$, $C_{VN'}$, $C_{WN'}$) ins Netz (GD) ein. Nach dem anfänglichen Vorladen der Kapazität des Spannungszwischenkreises (C2) über den Ladewiderstand $R_L$ mittels Relaiskontakt S0 steuert der Schalter (S7) der Koppelschaltung (LK) den intermittierenden Stromfluss zwischen dem kapazitiven Energiespeicher der Quelle (C1) und dem des Spannungszwischenkreises (C2) und wird nur geschlossen, wenn alle Phasen (U, V, W) der Wechselrichterleistungsstufe auf den Minuspol (-HV) des Spannungszwischenkreises des Wechselrichters (IN) geschaltet sind, d. h. entweder die unteren Schalter der Wechselrichterleistungsstufe (S2, S4, S6) oder entsprechend, je nach Stromflussrichtung der Wechselrichterausgangsströme (I1 ... I3), die antiparallelen zugehörigen Dioden (D2, D4, D6) leitend sind, und die oberen Schalter (S1, S3, S5) und Dioden (D1, D3, D5) entsprechend sperrend sind. Damit verharrt, ideale symmetrische 3-phasige Netzspannungen (L1 ... L3) vorausgesetzt, der Minuspol (-DC) des Solargenerators abgesehen von der Flussspannung der Diode (D7) der Koppelschaltung (LK) quasi auch auf Neutralleiterpotenzial (N). Die kapazitiven Ableitströme der Solarmodule, welche über die Kapazität ($C_{SR\_GND}$) zur Erde (GND) fließen, werden minimiert, und die Solarmodule haben allesamt positives Potenzial gegenüber Erde. Mögliche Ableitströme aufgrund der parasitären Kapazitäten des Schalters (S7) und der Diode (D7) der Koppelschaltung (LK) können durch eine Entkoppel-Kapazität ($Z_{N'}$) zwischen dem Minuspol (-DC) des Solargenerators und dem Sternpunkt des kapazitiven Ausgangsfilters des Wechselrichters ($C_{UN'}$, $C_{VN'}$, $C_{WN'}$), dem Nachgebildeten Neutralleiter (N'), kurzgeschlossen, und damit neutralisiert werden. Der Nachgebildete Neutralleiter (N') kann optional mit dem Neutralleiter (N) verbunden sein.

EP 2 421 142 A1

**Beschreibung**

Technisches Umfeld

Die Erfindung betrifft ein Verfahren zur Speisung des Spannungszwischenkreises eines Wechselrichters nach dem Oberbegriff der Ansprüche 1 und 16 sowie daraus abgeleitete Schaltungsanordnungen nach dem Oberbegriff des Anspruchs 26.
Gegenstand der Erfindung ist ein Verfahren zur energetischen Kopplung der einen Wechselrichter speisenden Gleichspannungs- oder Gleichstrom-Quelle und dem Spannungszwischenkreis des Wechselrichters, mit dem Ziel, die kapazitiven Ableitströme zu minimieren, indem mindestens ein Pol der Quelle auf konstantem Spannungspotenzial gegenüber einem erdbezogenen Potenzial wie Erd- oder Schutzleiter, im weiteren Text Erde genannt, gehalten wird. Anwendungsgebiete für dieses Kopplungsverfahren können u.a. z.B. solar- oder über Brennstoffzellen gespeiste Wechselrichter zur Einspeisung ins öffentliche Stromversorgungsnetz sein. Das vorgeschlagene Verfahren ist im Anwendungsbereich nicht auf die genannten Beispiele begrenzt, sondern kann überall dort eingesetzt werden, wo durch Wechselrichter verursachte Ableitströme auf Erde reduziert werden sollen.
Die Anwendung betrifft einen zwischenkreisspannungsgespeisten Wechselrichter, der über eine Leistungsbrücke eine ein- oder mehr-phasige Last über Pulsweiten-Modulation (PWM) der Leistungsschalter mit Wechselspannung beaufschlagt. Daraus resultiert dann, je nach Impedanz der Last, ein entsprechender Wechselstrom. Mit dieser Anmeldung soll ein neuartiges Verfahren zur Speisung des Spannungszwischenkreises eines Wechselrichters aus einer Gleichspannungs- oder Gleichstrom-Quelle vorgeschlagen werden. Das Verfahren ist geeignet, einerseits die kapazitiven Ableitströme der Quelle des Wechselrichters gegen Erde zu reduzieren, andererseits das absolute Potenzial, insbesondere auch die Polarität der Quelle gegenüber Erde, zu steuern. Das Verfahren wird beispielhaft an diversen Schaltungsbeispielen für netzgekoppelte Solarwechselrichter erläutert, es ist aber nicht auf diese Anwendung begrenzt, sondern kann gemäß der Oberbegriffe der Hauptansprüche auf alle zwischenkreisspannungsgespeisten Wechselrichter angewendet werden. Eine Marktübersicht für netzgekoppelte Solarwechselrichter ist z.B. in der Fachzeitschrift Photon veröffentlicht, wie in der Ausgabe März 2007 S. 80 -108.
Zur Problematik der kapazitive Ableitströme bei Solaranlagen kann zur Erläuterung das Ergebnis des Forschungsprojekts SIDEMA ("Sicherheitsaspekte bei Einsatz und Prüfung von transformatorlosen Wechselrichtern - Ergebnisse aus dem Projekt SIDEMA" J. Kirchhof, Institut für Solare Energieversorgungstechnik (ISET) e.V. D-34119 Kassel, veröffentlicht auf dem 21. Symposium Photovoltaische Solarenergie, 07.-10. März 2006, Kloster Banz, Bad Staffelstein), oder der Produktkatalog der Firma SMA für Sunny Family 2005/2006 Kap. 2.1 S. 152, herangezogen werden. Diese Ableitströme können also die Einsatzbereitschaft der Solaranlage beeinträchtigen, weil evtl. sogenannte Fehlerstromschalter ansprechen und den Solarwechselrichter vom Netz trennen könnten. Bei fehlendem oder schadhaftem Schutzleiteranschluss der Solarmodulrahmen kann es des Weiteren durch diese kapazitiven Ableitströme zu Stromschlägen bei Berührung derselben kommen. Diese kapazitiven Ableitströme werden generiert, wenn das Spannungspotenzial der Solarmodule gegenüber dem Erdpotenzial periodischen Änderungen ausgesetzt ist. Diese kapazitiven Ströme nehmen im Wesentlichen proportional zum Potenzialhub, als auch zur Potenzialänderungsfrequenz zu. Da die Leistungsstufe der Wechselrichter mit hoher Frequenz außerhalb des Empfindungsbereichs für das menschliche Ohr getaktet wird, können durch die Großflächigkeit der Solarmodule, dem Potenzialhub von evtl. bis zu mehreren Hundert Volt und der hohen Frequenz bei ungeeigneter PWM, z.B. einer unsymmetrischen Modulation der Leistungsschalter der Wechselrichterleistungsstufe, erhebliche kapazitive Ableitströme fließen. Da die Rahmen der Solarmodule bei transformatorlosen Wechselrichtern üblicherweise über einen Schutzleiteranschluss geerdet sind, fließt der weit überwiegende Teil dieser kapazitiven Ableitströme über die Solarmodulrahmen auf Erde ab. Bei der gebräuchlichen Montage der Solarmodule auf Hausdächern ist auch die physiologische Wirkung der verbleibenden kapazitiven Ableitströme zwischen Solarmodulfläche und Erdpotenzial auf die im Dielektrikum zwischen Solardach und Erde lebenden Hausbewohner teilweise umstritten. Ableitströme hoher Frequenz, die über den Schutzleiter der Solarmodulrahmen abfließen, erhöhen des Weiteren auch das leitungsgebundene elektromagnetische Störpotenzial. Mit dem vorgeschlagenen Verfahren werden diese kapazitiven Ableitströme auf die Solarmodulrahmen als auch ins Dielektrikum zwischen Solarzellen und Erde minimiert. Des weiteren kann die Polarität des Spannungspotenzials zwischen Solarzellen und Erde für alle Zellen gleich sein.

Stand der Technik

Die Ursache der kapazitiven Ableitströme bei Solaranlagen ist auch in der DE 10221592 A1 ausführlich beschrieben. Darin ist des Weiteren auch ein Problemlösungsvorschlag für Wechselrichterleistungsstufen zur einphasigen Netzeinspeisung ausführlich beschrieben. Ein weiterer ähnlicher Lösungsvorschlag ist unter der DE 102004030912 B3 beschrieben. Aber auch dieser Lösungsansatz eignet sich nur zur einphasigen Netzeinspeisung.
Ein genereller Lösungsansatz für die Problematik "Ableitströme auf Erde" ist die kapazitive Kopplung des Neutralleiters auf die Pole des Spannungszwischenkreises, insbesondere der Ausführungsart, dass der Spannungszwischenkreis symmetrisch auf zwei in Reihe liegende Kapazitäten aufgeteilt wird, und der Mittelabgriff mit dem Neutralleiter verbunden wird. Siehe dazu die Veröffentlichung von Prof. Dr. Mutschler "Wechselrichter für Photovoltaikanlagen", TU Darmstadt bezüglich des Einsatzes eines 3-Punkt-Wechselrichters. Diese Topologie eignet sich auch für 3-phasige Wechselrichter, bedarf jedoch höherer Zwischenkreisspannungen respektive evtl. bereits kritischer Solargeneratorspannungen, falls auf einen Spannungshochsetzsteller zur Speisung des Spannungszwischenkreises des Wechselrichters aus einer niedrigeren Solargeneratorspannung verzichtet wird. Auf demselben Lösungsansatz beruhen auch die weiteren Patentschriften DE 102004037446 A1 sowie DE 10225020 A1. Allen drei genannten Veröffentlichungen ist zu eigen, dass sie, wie in der erst Genannten von Prof. Dr. Mutschler erläutert, sehr hoher Zwischenkreisspannungen bedürfen. Falls man die komplexe und aufwendige Topologie eines 3-Punkt-Wechselrichters nicht einsetzen will, hat dies entsprechend hohe Schaltverluste in der Wechselrichterleistungsstufe sowie hohe Ummagnetisierungsverluste in den Glättungsinduktivitäten zur Folge.

Auch ein weiterer Aspekt, nämlich der Einfluss des Wechselrichters auf die Lebensdauer der Solarmodule, insbesondere wenn diese in Dünnschichttechnik ausgeführt sind, sollte mit berücksichtigt werden. So gibt es Hinweise, dass sowohl kapazitive Ableitströme als auch negative Spannungspotenziale an Solarmodulen gegenüber Erde deren Lebensdauer negativ beeinflussen könnten. So beschrieben z.B. in der Zeitschrift Photon März 2007 Seite 84. So gibt es fortlaufend neue Erkenntnisse und daraus resultierende Anforderungen bezüglich des geforderten Spannungspotenzials der Solarmodule gegenüber Erde, insbesondere für diverse Module mit Dünnschichtzellen oder Rückseitenkontaktzellen. Die oben bisher genannten transformatorlosen Schaltungsanordnungen mit Spannungszwischenkreis genügen diesen neuen Anforderungen nicht, da nicht alle Solarmodule einer Solaranlage unipolares Spannungspotenzial gegenüber Erde haben können.

In der DE 19732218 C1 wird eine Schaltungsanordnung für einen transformatorlosen Wechselrichter vorgeschlagen, bei dem ein Pol des Spannungszwischenkreises mit dem Neutralleiter und damit quasi mit Erde verbunden werden kann. Bei diesem Lösungsvorschlag muss jedoch ein großer Anteil der übertragenen Energie vollständig in einer Spule zwischengespeichert werden. Die induktive Zwischenspeicherung der Energie, sowie die vielen Schalter und Ventile durch die der Strom fließt, begrenzen jedoch den möglichen Wirkungsgrad dieser Schaltung. Des Weiteren ist diese Schaltungsanordnung auch nur zur einphasigen Netzeinspeisung geeignet.

Aufgabe

Selbst gestellte Aufgabe ist, die Vorteile des galvanisch getrennten transformatorischen Wechselrichters, wie geringe kapazitive Ableitströme der Quelle zur Erde sowie einer möglichen zumindest hochohmigen Erdung eines elektrischen Pols der Gleichspannungs- oder Gleichstrom-Quelle mit denen des transformatorlosen Wechselrichters, die da sind geringes Gewicht und Volumen zu kombinieren, wobei insbesondere auch eine Lösung für einen Wechselrichter mit 3-phasiger Ausgangsbrücke die Zielanwendung sein soll.

Vorgeschlagen werden soll also ein Verfahren für den Betrieb eines Wechselrichters, welches auch zur 3-phasigen Netzeinspeisung geeignet ist, mit moderaten Zwischenkreisspannungen konform mit der Isolationsspannung von Solarmodulen auskommt, möglichst geringe kapazitive Ableitströme auf das Erdpotenzial generiert, sowie eine wählbare positive oder negative Polarität der elektrischen Spannung der Gleichspannungs- oder Gleichstrom-Quelle gegenüber dem Erdpotenzial ermöglicht. Die Minimierung der durch die Solaranlage generierten elektromagnetischen Felder im Dielektrikum zwischen Solardach und Erde ist bezüglich eines marktrelevanten Kundenkreises ein weiteres Kriterium. Vorgeschlagen werden soll auch ein Verfahren mit einem Spannungshochsetzsteller für kleine Eingangsspannungen wie für Solar-Modulwechselrichter oder bestimmte Brennstoffzellen.

Des Weiteren soll durch kleine Schaltungserweiterungen ein und derselbe Wechselrichter an diverse applikationsbedingte Anforderungen angepasst werden können. Durch die optionale Überbrückung der vorgeschlagenen Koppelschaltung kann der Wechselrichter zwischen den Betriebsarten "minimaler Elektrosmog", d. h. minimalen Ableitströmen und "maximalem Wirkungsgrad" umgeschaltet werden, z.B. angepasst an den aktuellen Ableitstrom, der insbesondere wetterbedingt durch die Luftfeuchtigkeit oder Beregnung der Solarmodule stark schwanken kann. Eine wichtige applikationsbedingte Anforderung ist auch die Anpassung ein und desselben Wechselrichters an die aktuellen Erfordernisse der verwendeten Spannungsquelle wie Solarzellen unterschiedlichster Technologie oder anderer Spannungsquellen wie z.B. Brennstoffzellen.

Insbesondere auch die Betriebsumschaltung des Wechselrichters zwischen positiver und negativer Polarität der Spannungsquelle gegenüber Erde ist eine nützliche Schaltungsvariante zur Anpassung an die aktuell verwendete Solarzellentechnologie.

Die aus dem vorgeschlagenen Verfahren resultierenden Schaltungsanordnungen stellen hohe technologische Anforderungen an die Bauteile sowie den konstruktiven Aufbau des Wechselrichters, um trotz hoher Impulsströme innerhalb der vorgeschlagenen Koppelschaltung den gängigen Marktanforderungen wie geringer Kosten und hohem Wirkungsgrad zu genügen. Insbesondere der ESR der eingesetzten Speicherkondensatoren sowie die Flussspannung der Schalter in der Koppelschaltung beeinflussen maßgeblich den erreichbaren Wirkungsgrad.

Lösung:

Erfindungsgemäß wird die Aufgabe des Betriebs eines Wechselrichters mit geringen Ableitströmen und definierten Spannungspotenzialen zwischen einem Pol der Gleichspannungs- oder Gleichstrom-Quelle und Erde gemäß der kennzeichnenden Merkmale der unabhängigen Ansprüche 1, 16 und 26 in Verbindung mit den Oberbegriffsmerkmalen gelöst. Die Gleichspannungs- oder Gleichstrom-Quelle, z.B. über einen Solargenerator gespeist, wird nur dann mit dem Spannungszwischenkreis des Wechselrichters verbunden, wenn dieser ein bestimmtes Potenzial gegen Erde aufweist. D. h. der elektrische Ladungsfluss von der z.B. solar gespeisten Gleichspannungs- oder Gleichstrom-Quelle in den Spannungszwischenkreis des Wechselrichters erfolgt nicht kontinuierlich, sondern intermittierend zu Zeitpunkten mit gleicher Potenzialdifferenz des Spannungszwischenkreises des Wechselrichters zur Erde.

Sollen z.B. die Solarmodule zur Speisung eines Wechselrichters mit Neutralleiterbezug immer negatives oder positives Spannungspotenzial gegenüber Erde haben, erfolgt die Nachladung des Spannungszwischenkreises günstigerweise im Nullspannungsvektor der Wechselrichterleistungsstufe. Zur Beschreibung des Nullspannungsvektors siehe z.B. die bereits genannte DE 10221592A1. In Fig. 3 der vorliegenden Anmeldung entsprechen die Schaltzustände von V7 und V8 den beiden möglichen Nullspannungsvektoren einer 3-phasigen Wechselrichterausgangsstufe.

Im Nullspannungsvektor sind alle Ausgangsphasen des Wechselrichters mit einem Pol des Spannungszwischenkreises, d. h. dem Minus- oder Pluspol verbunden. Bei symmetrischem Betrieb des Wechselrichters, d. h. Einprägung symmetrischer Wechselrichterausgangsströme und symmetrischem Aufbau des Wechselrichters, insbesondere gleichwertiger Glättungsinduktivitäten, hat der entsprechende Pol des Spannungszwischenkreises bei Anliegen eines Nullspannungsvektors in der Wechselrichterleistungsstufe auch Neutralleiterpotenzial, sofern in ein 3-phasiges Netz mit symmetrischen Netzphasenspannungen in Bezug auf den Neutralleiter eingespeist wird. Da bei den verbreiteten Stromversorgungsnetzen das Neutralleiterpotenzial dem Erdpotenzial entspricht, hat damit im Nullspannungsvektor ein Pol des Spannungszwischenkreises quasi Erdpotenzial. D. h. wenn im Nullspannungsvektor eine bezüglich des Spannungspotenzials gegen Erde schwebende Gleichspannungs- bzw. Gleichstrom-Quelle, z.B. in der Ausführung eines Solargenerators, mit dem Spannungszwischenkreis des Wechselrichters verbunden wird, liegt damit auch ein Pol des Solargenerators auf Erdpotenzial. Auch wenn die Symmetrie der Schaltungskomponenten nicht vollständig gegeben ist, wird durch das vorgeschlagene Verfahren der Ableitstrom der Quelle auf Erde maßgeblich reduziert.

Durch Einsatz bekannter Modulationsverfahren, bei denen nur gleichartige Nullspannungsvektoren eingesetzt werden, d. h. bei einem 3-phasigen Wechselrichter entweder nur der Nullspannungsvektor V7, bei dem alle Phasen des Wechselrichters auf den Pluspol des Spannungszwischenkreises geschaltet werden, oder der Nullspannungsvektor V8, bei dem alle Phasen des Wechselrichters auf den Minuspol des Spannungszwischenkreises geschaltet werden, werden günstigerweise die Zeiten für eine mögliche Nachladung des Spannungszwischenkreises des Wechselrichters aus einer Gleichspannungs- oder Gleichstrom-Quelle maximiert, und zugleich ein schaltverlustarmes Modulationsverfahren eingesetzt, womit die zusätzlichen Verluste in den Schaltern, Dioden und Kapazitäten der vorgeschlagenen Koppelschaltung zwischen der Quelle und dem Spannungszwischenkreis des Wechselrichters wieder teilweise kompensiert werden können.

Bei ausschließlicher Nachladung des Spannungszwischenkreises des Wechselrichters im besagten Nullspannungsvektor V8 aus einer bezüglich des elektrischen Potenzials gegen Erde frei schwebenden Gleichspannungs- oder Gleichstrom-Quelle liegt deren Minuspol quasi auf Erdpotenzial. Eine Spannungsquelle z.B. in Form von Solarmodulen hat damit kein negatives Spannungspotenzial gegenüber Erde. Entsprechendes gilt bei ausschließlicher Nachladung im Nullspannungsvektor V7, wo dann der Pluspol der Spannungsquelle quasi auf Erde liegt, und die besagten Solarmodule dann nur negatives Potenzial gegenüber Erde aufweisen.

Auch eine Modulationsart mit alternierenden Nullspannungsvektoren V8 und V7 ist denkbar, allerdings sind die möglichen Nachladezeiten entsprechend kürzer, falls die fortlaufende Nachladung des Spannungszwischenkreises bei ableitstromarmem Betrieb des Wechselrichters nur in einem der beiden Nullspannungsvektoren V8 oder V7 erfolgen soll.

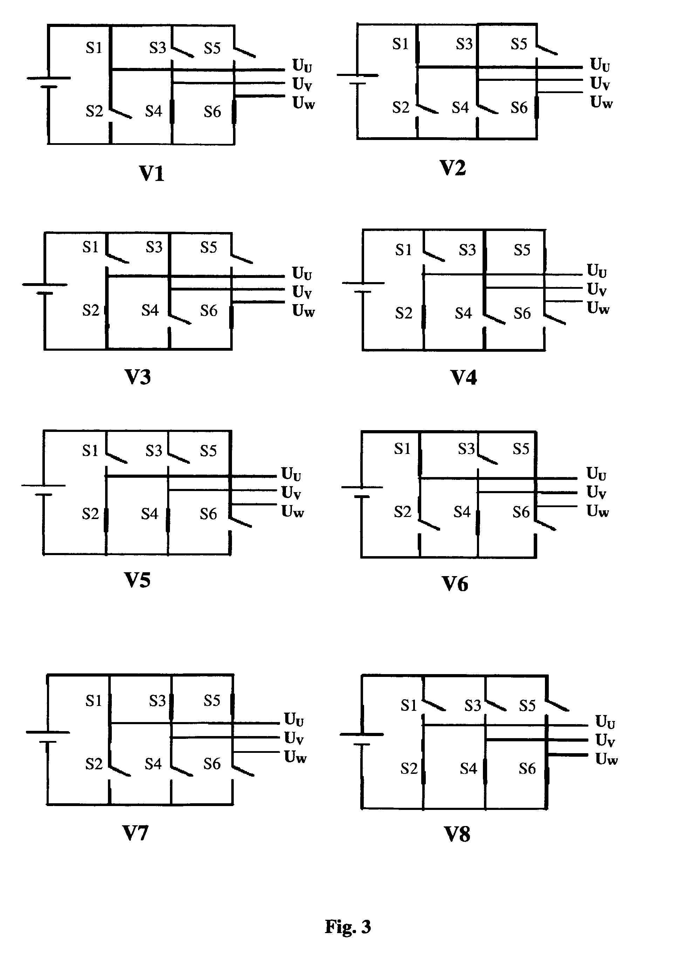

Falls nur der kapazitive Ableitstrom der Quelle reduziert werden soll und keine Unipolarität aller Solarmodule gegenüber Erde gefordert ist, kann bei einem 3-phasigen Wechselrichter die Nachladung auch immer bei den geradzahligen Spannungsvektoren V2, V4, V6 oder den ungeradzahligen Spannungsvektoren V1, V3, V5 erfolgen. Zur Beschreibung der Spannungsvektoren der 3-phasigen Wechselrichterleistungsstufe siehe auch Fig. 3 bis Fig. 6 in dieser Anmeldung. Es ist eine Vielzahl von möglichen Verfahren zur Pulsweiten-Modulation für Wechselrichterleistungsstufen bekannt. Des Weiteren gibt es zur hier vorgeschlagenen Nachladung in Zeitbereichen mit äquipotenzialer Spannung zwischen dem Spannungszwischenkreis des Wechselrichters und Erde eine Vielzahl von möglichen Spannungsvektorsequenzen, bei denen eine Nachladung des Spannungszwischenkreises des Wechselrichters aus einer Quelle ermöglicht werden kann, um die besagten Ableitströme zu reduzieren. Die dargestellten Varianten sind zum Zwecke der Veranschaulichung bestimmt, und nicht dazu bestimmt, den Schutzumfang der Erfindung zu beschränken. Auch ein Verfahren, bei dem nur bei bestimmten Spannungsvektoren der Wechselrichterleistungsstufe der Spannungszwischenkreis nicht nachgeladen wird, um die kapazitiven Ableitströme der Gleichspannungs- oder Gleichstrom-Quelle nur teilweise zu reduzieren, wird durch die unabhängigen Ansprüche mit abgedeckt. Ebenso ein gelegentliches Nachladen in Zeitbereichen, wo Spannungsvektoren anliegen, in denen keine äquipotenziale Spannungen zwischen dem Spannungszwischenkreis des Wechselrichters und Erde im Vergleich zu den bevorzugten Nachladevektoren vorliegen, ist durch die unabhängigen Ansprüche abgedeckt, und bietet keine Umgehung des als erfinderisch vorgeschlagenen Verfahrens.

Bei einem einphasigen Wechselrichter erfolgt die Nachladung günstigerweise in einem Nullspannungsvektor beim Netzspannungsnulldurchgang, denn dann liegt auch hier ein Pol des Spannungszwischenkreises auf Neutralleiterbezug, und damit auf Erdleiterpotenzial. Hier müssen entsprechend größere Zwischenkreiskapazitäten vorgehalten werden, da zwischen zwei Nachladevorgängen für den kapazitiven Energiespeicher des Spannungszwischenkreises des Wechselrichters jeweils eine halbe Netzperiode verstreicht.

Das pulsweise Nachladen des Spannungszwischenkreises führt zu kleinen Spannungsschwankungen am Solargenerator. Diese kleinen Spannungsschwankungen führen jedoch nur zu vernachlässigbaren kleinen Leistungseinbußen, da das Produkt von Strom und Spannung bei kleinen Spannungsänderungen am MPP (Maximum Power Point) nahezu gleich bleibt. Durch Einsatz genügend großer Kapazitäten in der Gleichspannungsquelle oder zusätzlicher Filter wie Glättungsdrosseln können diese Spannungsschwankungen um den MPP auch quasi eliminiert werden.

Die Erfindung umfasst in den Unteransprüchen weitere Varianten insbesondere zur applikationsspezifischen Anpassung, wie die Umschaltung zwischen einer Schaltungsanordnung mit positivem Potenzial des Spannungsgenerators wie z.B. Solarmodule gegen Erde und einer Schaltungsanordnung mit negativem Potenzial des Spannungsgenerators gegenüber Erde mittels Relaiskontakten, oder die Überbrückung der vorgeschlagenen Kopplung zwischen der Gleichspannungs- oder Gleichstrom-Quelle und dem Spannungszwischenkreis des Wechselrichters zur Wirkungsgradoptimierung, falls die applikationsbedingten Randbedingungen dies zumindest zeitweise zulassen, oder einen DC/DC Wandler, insbesondere in der Form eines Spannungshochsetzstellers und dessen Überbrückung z.B. über Relaiskontakte, falls ein Hochsetzen der Eingangsspannung nicht notwendig ist. Der optionale Spannungshochsetzsteller verlängert z.B. die täglichen Betriebszeiten eines Solargenerators, um auch bei minimaler Sonneneinstrahlung noch ins Netz einspeisen zu können.

Bei sehr niedriger Spannung des Spannungsgenerators wie z.B. für Modulwechselrichter oder bei Brennstoffzellen kann der Spannungshochsetzsteller auch synchron zu den Spannungsvektoren der Wechselrichterleistungsstufe getaktet werden, um z.B. die Ableitströme dadurch zu reduzieren, dass der Spannungszwischenkreis des Wechselrichters immer bei Spannungsvektoren bei denen äquipotenziale Spannungspotenziale am Spannungszwischenkreis gegen Erde anliegen nachgeladen wird.

Es sei zu verstehen, dass die folgenden detaillierten Beschreibungen und schaltungstechnischen Beispiele, während sie bevorzugte Ausführungsformen angeben, zum Zwecke der Veranschaulichung bestimmt sind, und nicht dazu bestimmt sind, den Schutzumfang der Erfindung zu beschränken.

Beschreibung der Zeichnungen / Ausführungsbeispiele:

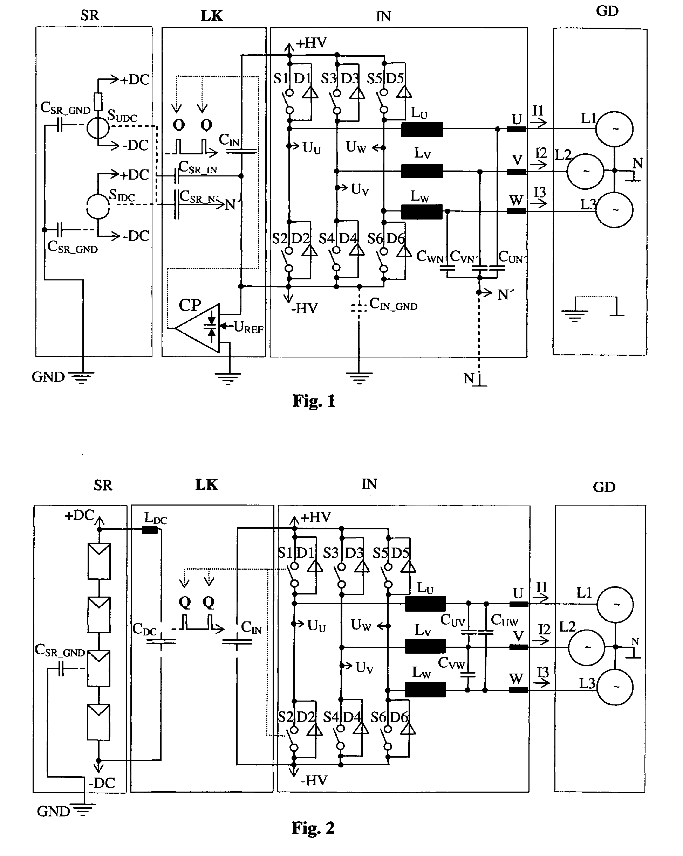

Bilder Fig. 1, Fig. 2, Fig. 8, Fig. 10, Fig. 12, Fig. 14, Fig. 16, Fig. 18, Fig. 20, Fig. 22, Fig. 24, Fig. 26, Fig. 28 und Fig. 30 welche Schaltungsanordnungen zur Umsetzung des vorgeschlagenen Verfahrens darstellen, zeigen im Wesentlichen folgenden Aufbau von links nach rechts:

Die Gleichspannungs- oder Gleichstrom-Quelle SR z.B. aus Solarzellen gespeist, die neuartige als erfinderisch vorgeschlagene Kopplung LK zwischen der Quelle SR und dem Spannungszwischenkreis des Wechselrichters IN mit dem Pluspol +HV und dem Minuspol -HV, die Wechselrichterleistungsstufe mit den Leistungsschaltern S1, S2, S3 ... welche über den LC-Ausgangsfilter die Ausgangsklemmen der Phasen U, V ... speist, sowie die Ausgangslast z.B. ein Niederspannungsnetz GD, dargestellt als Wechselspannungsgenerator(en) L1 ... mit Neutralleiterbezug N.

Die Leistungsschalter können bei Einsatz von aktuell verfügbaren Halbleitern als IGBT oder MOSFET ausgeführt sein. Parallel zu den Schaltern können elektrische Ventile geschaltet sein, die z.B. als Halbleiterdioden D1, D2, D3 ... ausgeführt sein können und zumindest dann den Strom übernehmen, wenn beide Schalter einer Halbbrücke, z.B. S1 und S2, geöffnet sind, wie z.B. in der Totzeit, wo beim Umschalten der Halbbrücke ein überlappendes Schalten verhindert werden soll. Nach Stand der Technik werden unidirektional leitende Schalter für S1, S2, S3 ... eingesetzt, die nur dann den Strom im entsprechenden Brückenzweig übernehmen, falls dieser gegensinnig zu der entsprechenden antiparallel liegenden Diode D1, D2, D3 ... vom oder zum entsprechenden Pol +HV oder -HV des Spannungszwischenkreises fliest. Fig. 8 ist ausführlicher erklärt, die Erläuterungen für die weiteren Bilder bauen aufeinander auf.

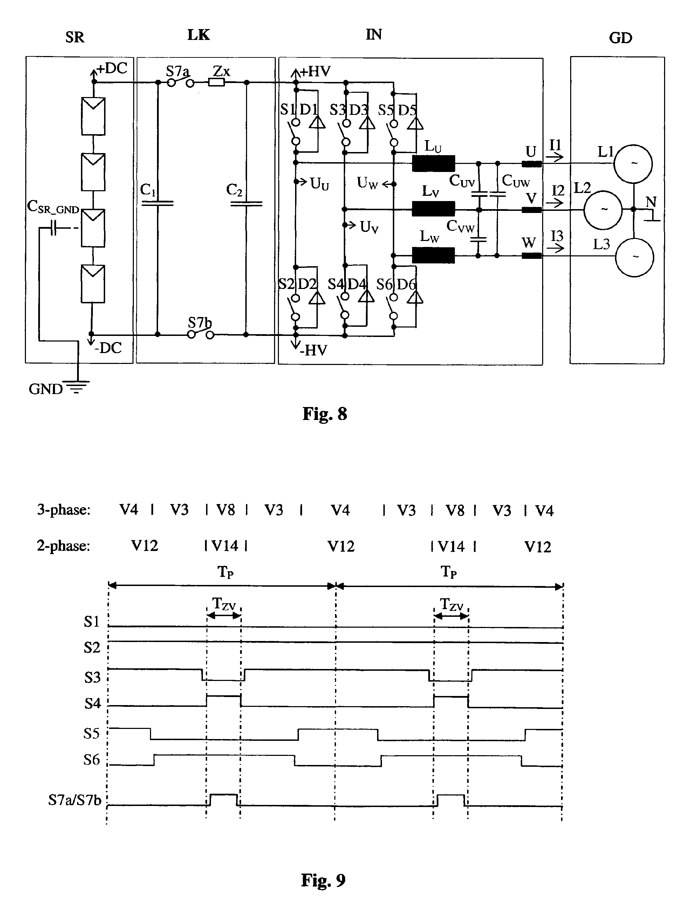

Mögliche Schalterzustände der Schalter S1, S2, S3 ... sind in den Schaltsequenzdiagrammen Fig. 9, Fig. 11, Fig. 13, Fig. 17, Fig. 19, Fig. 23, Fig. 25, Fig. 27 und Fig. 29 beispielhaft dargestellt. Tiefer liegender Strich zeigt an: Schalter in Ruheposition, höher liegender Strich zeigt an: Schalter ist in der zur Ruheposition inversen Arbeitsposition. Einfache Schließer sind in Ruheposition offen. Wechselkontakte sind in der Ruheposition gemäß der Zeichnungen geschaltet. Fig. 9 ist ausführlich erklärt, die Erläuterungen für die weiteren Bilder bauen darauf auf.

Fig. 1 Allgemeine schematische Darstellung des Verfahrens

Fig. 2 Schematische Darstellung des Verfahrens in einer bevorzugten Ausführungsform

Fig. 3 Die Schaltzustände einer 3-phasigen Wechselrichterleistungsstufe mit zugehörigen Spannungsvektoren V1 bis V8

Fig. 4 Raumzeigerdiagramm der Spannungsvektoren V1 bis V8 einer 3-phasigen Wechselrichterleistungsstufe

Fig. 5 Spannungspotenziale am Mittelabgriff der Halbbrücken sowie des Neutralleiters bei Einspeisung in ein 3-phasiges Netz in Bezug auf den Minuspol des Spannungszwischenkreises für die 6 Sektoren einer Drehfeldumdrehung einer 3-phasigen Wechselrichterleistungsstufe mit jeweils einer beispielhaften PWM-Schaltsequenz pro Sektor mit den Spannungsvektoren V1 bisV6 unter ausschließlicher Verwendung des Nullspannungsvektors V8

Fig. 6 Spannungspotenziale am Mittelabgriff der Halbbrücken sowie des Neutralleiters bei Einspeisung in ein 3-phasiges Netz in Bezug auf den Minuspol des Spannungszwischenkreises für die 6 Sektoren einer Drehfeldumdrehung einer 3-phasigen Wechselrichterleistungsstufe mit jeweils einer beispielhaften PWM-Schaltsequenz pro Sektor mit den Spannungsvektoren V1 bisV6 unter ausschließlicher Verwendung des Nullspannungsvektors V7

Fig. 7 Die Schaltzustände einer Wechselrichterleistungsstufe mit zwei Halbbrücken und zugehörigen Spannungsvektoren V11 bis V 14 sowie die Spannungspotenziale am Mittelabgriff der Halbbrücken und des Neutralleiters bei Einspeisung in ein Dreileiternetz mit 180° Phasenverschiebung zwischen den Netzphasen L1 und L2 in Bezug auf den Minuspol des Spannungszwischenkreises

Fig. 8 Schaltungsanordnung für einen Wechselrichter zur mehr-phasigen Netzeinspeisung

Fig. 9 Beispiel einer Schaltsequenz für die Schalter der Schaltungsanordnung in Fig. 8

Fig. 10 Schaltungsanordnung bei negativem Potenzial der Module des Solargenerators gegenüber Erde

Fig. 11 Beispiel einer Schaltsequenz für die Schalter der Schaltungsanordnung in Fig. 10

Fig. 12 Schaltungsanordnung bei positivem Potenzial der Module des Solargenerators gegenüber Erde

Fig. 13 Beispiel einer Schaltsequenz für die Schalter der Schaltungsanordnung in Fig. 12

Fig. 14 Schaltungsanordnung gemäß Fig. 12 mit Leistungshalbleitern nach Stand der Technik mit integrierter antiparalleler Diode

Fig. 15 Schaltungsanordnung zum Umschalten der Polarität der Module des Solargenerators gegenüber Erde gemäß Schaltungsanordnung in Fig. 10 und Fig. 12 bzw. Fig 14

Fig. 16 Schaltungsanordnung mit zyklischem Tausch des kapazitiven Energiespeichers für den Spannungszwischenkreis des Wechselrichters und positivem Potenzial der Module des Solargenerators gegenüber Erde

Fig. 17 Beispiel einer Schaltsequenz für die Schalter der Schaltungsanordnung in Fig. 16

Fig. 18 Schaltungsanordnung mit zyklischem Tausch des kapazitiven Energiespeichers für den Spannungszwischenkreis des Wechselrichters und negativem Potenzial der Module des Solargenerators gegenüber Erde

Fig. 19 Beispiel einer Schaltsequenz für die Schalter der Schaltungsanordnung in Fig. 18

Fig. 20 Schaltungsanordnung gemäß Fig. 16 mit Leistungshalbleitern nach Stand der Technik mit integrierter antiparalleler Diode

Fig. 21 Schaltungsanordnung zum Umschalten der Polarität der Module des Solargenerators gegenüber Erde gemäß Schaltungsanordnung in Fig. 16 bzw. Fig. 20 und Fig. 18

Fig. 22 Schaltungsanordnung mit zyklischem Tausch des kapazitiven Energiespeichers für den Spannungszwischenkreis eines Wechselrichters zur einphasigen Netzeinspeisung und positivem Potenzial der Module des Solargenerators gegenüber Erde

Fig. 23 Beispiel einer Schaltsequenz für die Schalter der Schaltungsanordnung in Fig. 22

Fig. 24 Schaltungsanordnung mit zyklischem Tausch des kapazitiven Energiespeichers für den Spannungszwischenkreis eines Wechselrichters zur Einspeisung in ein Dreileiternetz mit 180° Phasenverschiebung zwischen den Netzphasen L1 und L2 und positivem Potenzial der Module des Solargenerators gegenüber Erde

Fig. 25    Beispiel einer Schaltsequenz für die Schalter der Schaltungsanordnung in Fig. 24

Fig. 26    Schematische Darstellung der Schaltungsanordnung zur Speisung des Spannungszwischenkreises des Wechselrichters aus einer Gleichstromquelle

Fig. 27    Beispiel einer Schaltsequenz für die Schalter der Schaltungsanordnung in Fig. 26

Fig. 28    Schaltungsanordnung mit synchron zur Wechselrichterleistungsstufe schaltendem Spannungshochsetzsteller

Fig. 29    Beispiel einer Schaltsequenz für die Schalter der Schaltungsanordnung in Fig. 28

Fig. 30    Schaltungsanordnung mit der Option der Überbrückung der Koppelschaltung zur intermittierenden Nachladung des Spannungszwischenkreises des Wechselrichters

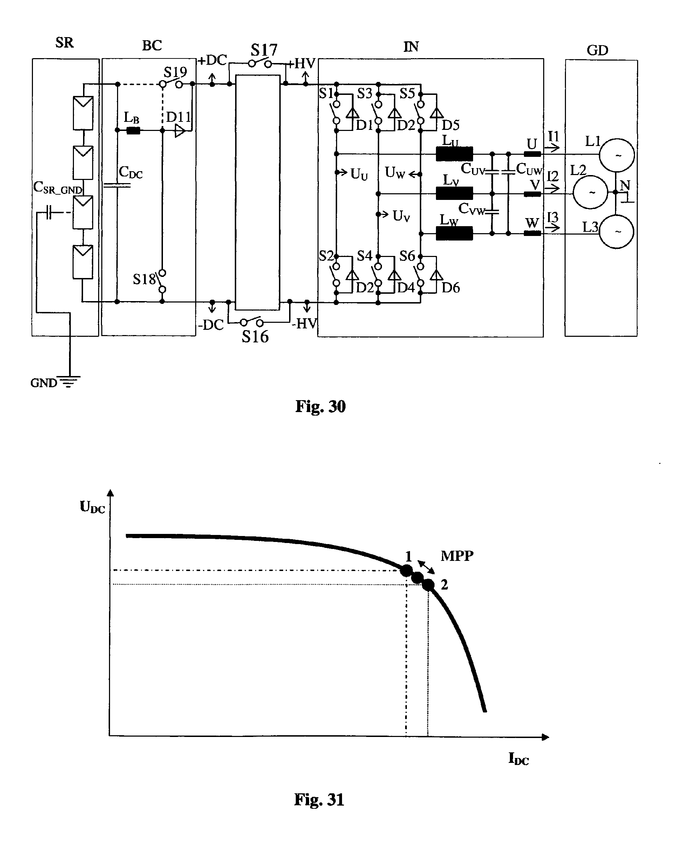

Fig. 30    Kennlinie eines Solargenerators

Fig. 1 zeigt schematisch das vorgeschlagene Verfahren für einen 3-phasigen Wechselrichter. Der Wechselrichter IN wird über die als erfinderisch vorgeschlagene Koppelschalung LK aus einer Spannungs- oder Strom-Quelle SR gespeist. $S_{UDC}$ zeigt eine Spannungsquelle mit dem positiven Pol +DC und dem negativen Pol -DC, alternativ zeigt $S_{IDC}$ eine Stromquelle mit dem positiven Pol +DC und dem negativen Pol -DC. Die Energie der Quelle SR wird intermittierend in Form von elektrischen Ladungsträgerpaketen Q an den kapazitiven Energiespeicher des Spannungszwischenkreises $C_{IN}$ weitergeleitet. Als Ladungsträgerpaket wird hier das Zeitintegral über einen kurzen Stromimpuls oder die elektrische Ladung einer Kapazität bezeichnet. Der Transport dieser Ladungsträgerpakete Q wird durch den Fensterkomparator CP getriggert, welcher das Spannungspotenzial zwischen einem Pol des Spannungszwischenkreises, hier des Minuspols -HV, und Erde GND misst. Die Referenzspannung $U_{REF}$ für den Fensterkomparator CP gibt an, bei welcher Differenzspannung gegenüber Erde GND die Nachladung des Spannungszwischenkreises des Wechselrichters IN mit den Polen +HV und -HV aus der Quelle SR ermöglicht wird. Solange die Potenzialdifferenz zwischen einem Pol des Spannungszwischenkreises, also des Pluspols +HV oder des Minuspols -HV und Erde GND in einem durch den Fensterkomparator CP vorbestimmten Spannungsbereich nahe der Referenzspannung $U_{REF}$ liegt, kann Ladung von der Quelle SR auf den kapazitiven Energiespeicher des Spannungszwischenkreises $C_{IN}$ des Wechselrichters IN fließen.

Die Wechselrichterleistungsstufe mit den Schaltern S1 bis S6 und den Freilaufdioden D1 bis D6 schalten jeweils einen Anschluss der Glättungsinduktivitäten $L_U$, $L_V$, $L_W$ der drei Phasen U, V, W des Wechselrichters mit hoher Frequenz zwischen den Polen des Spannungszwischenkreises +HV und -HV hin und her, wobei durch die Wahl der jeweiligen Pulsweiten für die Schalter S 1 bis S6 zum Netzspannungsverlauf phasengleiche sinusförmige Wechselrichterausgangsströme I1 bis I3 generiert werden. Zur Glättung der Wechselrichterausgangsspannungen an den Ausgangsklemmen der 3 Phasen U, V, W dienen die Kapazitäten $C_{UN'}$, $C_{VN'}$, $C_{WN'}$. Deren Sternpunkt, als Nachgebildeter Neutralleiter N' bezeichnet, hat bei Verwendung gleichwertiger Kapazitäten quasi Neuualleiterpotenzial, und kann optional mit dem Neutralleiter N verbunden werden. Als Ausgangslast des Wechselrichters IN ist hier ein 3-phasiges Netz GD mit Neutralleiterbezug N dargestellt. Die drei Netzphasen L1 bis L3 werden als symmetrische sinusförmige Spannungsquellen gleicher Amplitude mit jeweils 120° Phasenverschiebung betrachtet, in welches die zu diesem System ebenfalls symmetrischen Wechselrichterausgangsströme I1 bis I3 eingespeist werden. Der Neutralleiter N soll Erdpotenzial GND haben. Die Gleichspannungs- oder Gleichstrom-Quelle SR ist bezüglich ihres Spannungspotenzials gegen Erde GND freischwebend und nur über die parasitäre Kapazität $C_{SR-GND}$ mit Erde GND gekoppelt. Die parasitäre Wechselrichterkapazität $C_{IN\_GND}$ zwischen dem Spannungszwischenkreis des Wechselrichters IN und Erdpotenzial GND sowie die parasitären Kopplungskapazitäten $C_{SR\_IN}$ zwischen der Quelle SR und dem Wechselrichter IN sollen vernachlässigbar klein sein. Da die Quelle SR zwecks Transport der Ladungsträgerpakete Q nur dann mit dem kapazitiven Energiespeicher des Spannungszwischenkreises $C_{IN}$ des Wechselrichters IN verbunden wird, wenn die Potenzialdifferenz zwischen dem Zwischenkreis $C_{IN}$ und dem Erdleiterpotenzial GND möglichst gleichbleibend ist, verharren bei der Spannungsquelle beide Pole, und bei der Stromquelle ein Pol (möglichst der Pol mit der größeren Kapazität gegen Erde GND) auf gleichbleibendem Spannungspotenzial, und ihre kapazitiven Ableitströme auf Erde GND über die parasitäre Kapazität $C_{SR\_GND}$ werden minimiert. Falls die Schaltungsanordnung zum intermittierenden Transport der elektrischen Ladungsträgerpakete Q an den kapazitiven Energiespeicher des Spannungszwischenkreises $C_{IN}$ eine nicht zu vernachlässigende schaltungstechnisch bedingte parasitäre Kapazität $C_{SR\_IN}$ zwischen der Quelle SR und dem Wechselrichter IN aufweist, kann optional zwischen der Quelle SR und dem Nachgebildeten Neutralleiter N' die Entkoppel-Kapazität $C_{SR\_N'}$ geschaltet werden, welche vielfach größer sein sollte als die parasitäre Kapazität $C_{SR\_IN}$ zwischen der Quelle SR und dem Wechselrichter IN.

Fig. 2 zeigt aufbauend auf den Erläuterungen aus Fig. 1 eine bevorzugte Ausführungsform des vorgeschlagenen Verfahrens, angewendet für einen Solarwechselrichter für 3-phasige Netzeinspeisung. Die Energie des Solargenerators SR wird intermittierend, in Form von Ladungsträgerpaketen Q an den kapazitiven Energiespeicher $C_{IN}$ des Spannungszwischenkreises des Wechselrichters IN mit den Polen +HV und -HV weitergeleitet.

Die gestrichelten Linien von den Schaltern der Wechselrichterleistungsstufe zu den Ladungsträgerpaketen Q sollen anzeigen, dass der intermittierende Ladungsfluss durch die Schalterstellungen der Schalter S 1 bis S6 getriggert wird.

Es gibt eine Anzahl verschiedener vorteilhafter Schaltzustände der Schalter S1 bis S6, auch Spannungsvektoren V1 bis V8, wie in Fig. 3 erklärend dargestellt, genannt, bei denen der solar gespeiste Spannungsgenerator SR mit den Polen +DC und -DC, zwecks Transport der elektrischen Ladungsträgerpakete Q, mit dem Spannungszwischenkreis, mit den Polen +HV und -HV, des Wechselrichters IN verbunden werden kann, ohne dass der Solargenerator SR sein Potenzial gegen Erde GND ändern müsste, da die Pole +HV und -HV des Spannungszwischenkreises bei diesen Spannungsvektoren auf gleichbleibendem Potenzial in Bezug auf den Neutralleiter N und damit auch in Bezug auf Erde GND liegen. Um einen, trotz intermittierendem Ladungsträgerfluss Q kontinuierlichen elektrischen Leistungsfluss aus dem Solargenerator SR zu haben, ist die Speicherkapazität $C_{DC}$ groß genug zu dimensionieren, und eventuell noch eine Glättungsinduktivität $L_{DC}$ in den Gleichstromkreis des Solargenerators SR einzufügen. Weitere detailliertere Erläuterungen können von der Beschreibung aus Fig. 1 abgeleitet werden, hier wird eine zu vernachlässigende parasitäre Kapazität der Koppelschaltung LK angenommen, und die Netzausgangskapazitäten $C_{UV}$, $C_{UW}$, $C_{VW}$ des LC Glättungsfilters sind direkt zwischen die Netzphasen geschaltet.

Fig. 3 zeigt die Zuordnung der Schaltzustände der Schalter S 1 bis S6 einer 3-phasigen Wechselrichterleistungsstufe zu den zugehörigen Spannungsvektoren V1 bis V8. Am Mittelabgriff der jeweiligen Halbbrücken werden die drei getakteten Phasenspannungen $U_U$, $U_V$, $U_W$ der Phasen U, V, W abgegriffen.

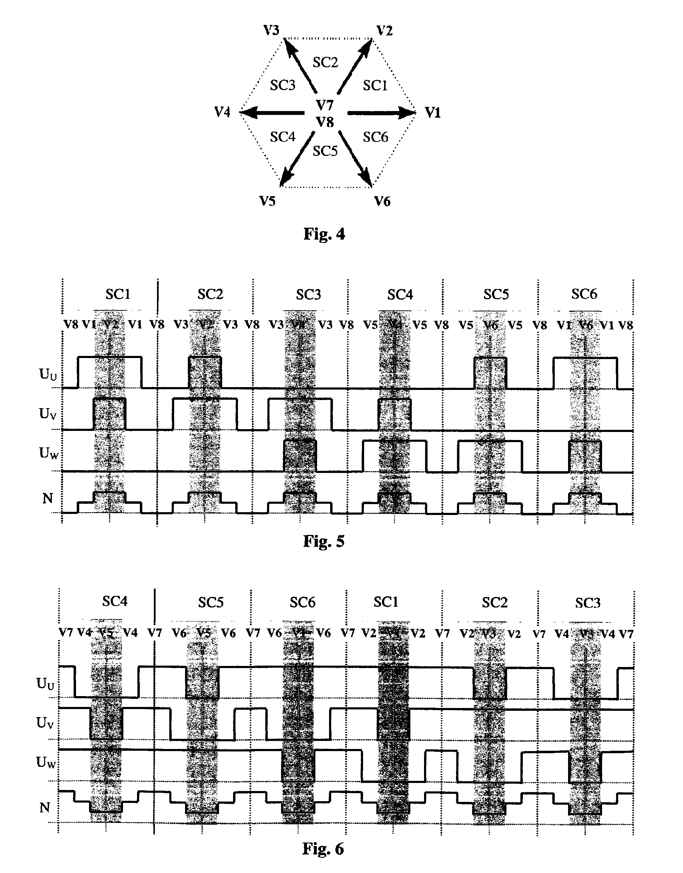

Fig. 4 zeigt das Raumzeigerdiagramm einer 3-phasigen Wechselrichterleistungsstufe in Bezug auf den Sternpunkt, hier gemäß Fig. 2 der Neutralleiter N des 3-phasigen Netzspannungssystems L1 bis L3, mit den 6 Spannungssektoren SC1 bis SC6 und den zugehörigen Spannungsvektoren V1 bis V6 der Wechselrichterleistungsstufe. In den beiden Nullspannungsvektoren V7 und V8 liegen die getakteten Halbbrückenpotenziale $U_U$, $U_V$, $U_W$ der Wechselrichterleistungsstufe auf quasi Neutralleiterbezug N, diese Raumzeiger haben damit den Betrag 0.

Das vorgeschlagene Verfahren kann auf alle Arten der PWM-Generierung für die Wechselrichterleistungsstufe mit den Schaltern S1 bis S6 angewendet werden.

Im weiteren sind in Fig. 5 und Fig. 6 beispielhaft jeweils eine schaltverlustarme und für das Verfahren besonders vorteilhafte PWM dargestellt. Diese schaltverlustarme PWM reduziert des Weiteren den Strom über die parasitäre Kopplungskapazität $C_{SR\_IN}$ zwischen der Quelle SR und dem Wechselrichter IN um ca. 1/3, da der pro PWM-Periode, wie z.B. der zwischen zwei Nullspannungsvektoren, durchlaufene Spannungshub zwischen der Quelle und dem Spannungszwischenkreis des Wechselrichters IN um 1/3 reduziert ist.

Fig. 5 zeigt das Potential $U_U$, $U_V$, $U_W$ am Mittelabgriff der 3 Halbbrücken gemäß Schaltungsanordnung Fig.1 oder Fig. 2 zur Taktung der Induktivitäten $L_U$, $L_V$, $L_W$ zur Speisung der drei Wechselrichterausgangsphasen U, V, W, sowie das Potential des Sternpunktes des 3-phasigen Systems, des Neutralleiters N, in Bezug auf den Minuspol -HV des Spannungszwischenkreises des Wechselrichters IN bei einer PWM die ausschließlich V8 Nullspannungsvektoren verwendet, bei der also im Nullspannungsvektor alle Halbbrückenpotentiale $U_U$, $U_V$, $U_W$ des Wechselrichters gemäß Fig. 3 auf den Minuspol -HV des Spannungszwischenkreises geschaltet werden. Während einer Drehfeldumdrehung der Wechselrichterausgangsstufe, welche der der Grundwelle der Netzspannung entspricht, werden alle Spannungssektoren SC1 bis SC6 durchlaufen. Für jeden Spannungssektor ist jeweils nur exemplarisch eine für diesen Sektor typische Schaltsequenz der Schalter S1 bis S6 der Leistungsstufe des Wechselrichters IN dargestellt. In der realen Anwendung besteht jeder der Spannungssektoren SC1 bis SC6 je nach PWM -Trägerfrequenz aus einer Vielzahl von Schaltsequenzen unterschiedlicher Pulsweiten unter Einsatz der gleichen Spannungsvektoren. Eine Nachladung des Spannungszwischenkreises mit den Polen +HV und -HV des Wechselrichters aus der Quelle SR ist gemäß des vorgeschlagenen Verfahrens dann vorteilhaft, wenn das Potential zwischen einem Pol des Spannungszwischenkreises +HV oder -HV und dem Neutralleiter N, und damit auch in Bezug auf Erde GND, konstant ist. Gemäß Fig. 5 kann z.B. immer bei den geradzahligen Spannungsvektoren V2, V4, V6 oder einer Teilmenge daraus der Spannungszwischenkreis des Wechselrichters IN aus der Quelle SR nachgeladen werden. Die maximal mögliche Nachladefrequenz wäre dann gleich der PWM - Trägerfrequenz. Bei Nachladung bei den ungeradzahligen Spannungsvektoren V1, V3, V5 ist die Nachladefrequenz doppelt so hoch, und die Pulsweite zweier Halbbrücken darf nicht gleich sein, da sonnst während eines PWM-Zyklus keine ungeradzahligen Vektoren anliegen, und damit nicht nachgeladen werden kann. Eine besonders vorteilhafte Ausführung des vorgeschlagenen Verfahrens besteht darin, nur im Nullspannungsvektor V8 den Spannungszwischenkreis des Wechselrichter IN aus der Quelle SR nachzuladen, weil dann die Quelle SR, wenn sie z.B. mit Solarmodulen mit entsprechend potentialsensiblen Solarzellen aufgebaut ist, im Gesammten positives Potential gegenüber Erde GND aufweist.

Fig. 6 zeigt das Potential $U_U$, $U_V$, $U_W$ am Mittelabgriff der 3 Halbbrücken gemäß Schaltungsanordnung Fig.1 oder Fig. 2 zur Taktung der Induktivitäten $L_U$, $L_V$, $L_W$ zur Speisung der drei Wechselrichterausgangsphasen U, V, W, sowie das Potential des Sternpunktes des 3-phasigen Systems, des Neutralleiters N, in Bezug auf den Minuspol -HV des Spannungszwischenkreises des Wechselrichters IN bei einer PWM die ausschließlich V7 Nullspannungsvektoren verwendet, bei der also im Nullspannungsvektor alle Halbbrückenpotentiale $U_U$, $U_V$, $U_W$ des Wechselrichters gemäß Fig. 3 auf den Pluspol +HV des Spannungszwischenkreises geschaltet werden. Während einer Drehfeldumdrehung der Wechselrichterausgangsstufe, welche der der Grundwelle der Netzspannung entspricht, werden alle Spannungssektoren SC1 bis SC6 durchlaufen. Für jeden Spannungssektor ist jeweils nur exemplarisch eine für diesen Sektor typische Schaltsequenz der Schalter S1 bis S6 der Leistungsstufe des Wechselrichters IN dargestellt. In der realen Anwendung besteht jeder der Spannungssektoren SC1 bis SC6 je nach PWM -Trägerfrequenz aus einer Vielzahl von Schaltsequenzen unterschiedlicher Pulsweiten unter Einsatz der gleichen Spannungsvektoren. Eine Nachladung des Spannungszwischenkreises mit den Polen +HV und -HV des Wechselrichters aus der Quelle SR ist gemäß des vorgeschlagenen Verfahrens dann vorteilhaft, wenn das Potential zwischen einem Pol des Spannungszwischenkreises +HV oder -HV und dem Neutralleiter N, und damit auch in Bezug auf Erde GND, konstant ist. Gemäß Fig. 6 könnte z.B. immer bei den ungeradzahligen Spannungsvektoren V1, V3, V5 oder einer Teilmenge daraus der Spannungszwischenkreis des Wechselrichters IN aus der Quelle SR nachgeladen werden. Die maximal mögliche Nachladefrequenz wäre dann gleich der PWM -Trägerfrequenz. Bei Nachladung bei den geradzahligen Spannungsvektoren V2, V4, V6 ist die Nachladefrequenz doppelt so hoch, und die Pulsweite zweier Halbbrücken darf nicht gleich sein, da sonst während eines PWM-Zyklus keine geradzahligen Vektoren anliegen, und damit nicht nachgeladen werden kann. Eine besonders vorteilhafte Ausführung des vorgeschlagenen Verfahrens besteht darin, nur im Nullspannungsvektor V7 den Spannungszwischenkreis des Wechselrichter IN aus der Quelle SR nachzuladen, weil dann die Quelle SR, wenn sie z.B. mit Solarmodulen mit entsprechend potentialsensiblen Solarzellen aufgebaut ist, im Gesammten negatives Potential gegenüber Erde GND aufweist.

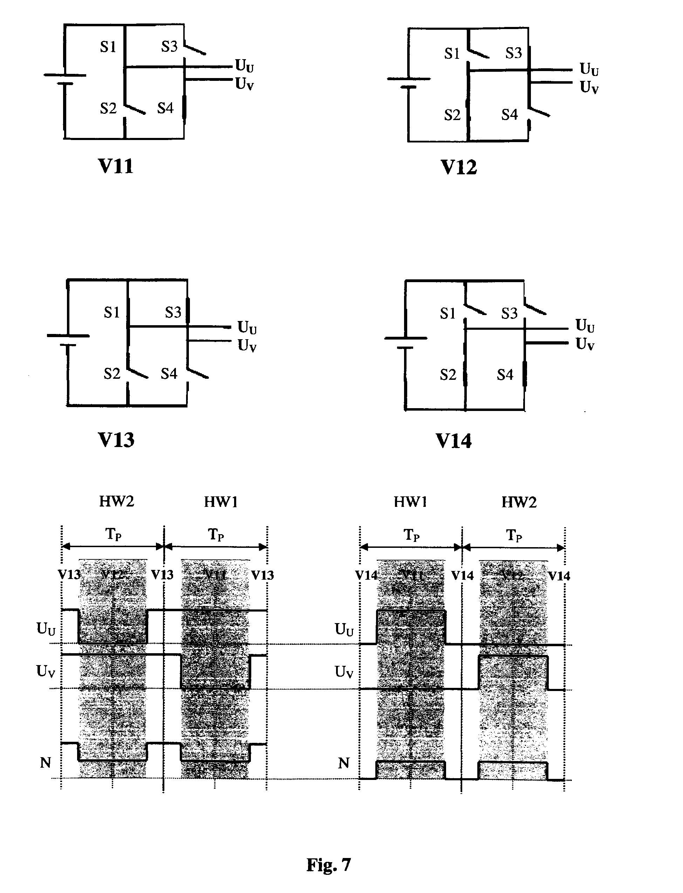

Fig. 7 zeigt die Zuordnung der Schaltzustände der Schalter S1 bis S4 einer Wechselrichterleistungsstufe mit zwei Halbbrücken zu den zugehörigen Spannungsvektoren V11 bis V 14. Am Mittelabgriff der jeweiligen Halbbrücken werden die beiden getakteten Phasenspannungen $U_U$ und $U_V$ der beiden Phasen U und V abgegriffen.

Die beiden Nullspannungsvektoren V13 und V 14 enstprechen den Nullspannungsvektoren V7 und V8 des 3-phasigen Wechselrichters in Fig. 3.

In Fig. 7 unten sind die Potentiale $U_U$ und $U_V$ am Mittelabgriff der 2 Halbbrücken am Beispiel gemäß einer Schaltungsanordnung nach Fig. 8 für das Dreileiternetz mit 180° Phasenverschiebung zwischen den Netzphasen L1 und L2 zur Taktung der Induktivitäten $L_U$ und $L_V$ zur Speisung der beiden Wechselrichterausgangsphasen U und V, sowie das Potential des Neutralleiters N in Bezug auf den Minuspol -HV des Spannungszwischenkreises des Wechselrichters IN dargestellt.

Die in Fig. 7 unten dargestellte PWM der Halbbrückenpotenziale $U_U$ und $U_V$ ist schaltverlustarm, und für das Verfahren besonders vorteilhaft, da der Strom über die parasitären Kopplungskapazitäten $C_{SR\_IN}$ zwischen der Quelle SR und dem Wechselrichter IN halbiert wird, da der pro PWM-Periode, wie z.B. der zwischen zwei Nullspannungsvektoren, durchlaufene Spannungshub zwischen der Quelle SR und dem Spannungszwischenkreis des Wechselrichters IN halbiert wird.

Links unten in Fig. 7 sind beispielhaft zwei Schaltsequenz der Schalter S1 bis S4 der Leistungsstufe des Wechselrichters IN bei ausschließlicher Verwendung des Nullspannungsvektors V13 dargestellt, die erste Sequenz HW2 entspricht einer PWM-Periode der Wechselrichterleistungsstufe aus der Netzhalbwelle, wo Phase V positives Potential gegenüber Phase U hat. Die zweite Sequenz HW1 entspricht einer PWM-Periode der Wechselrichterleistungsstufe aus der Netzhalbwelle, wo Phase U positives Potential gegenüber Phase V hat.

Rechts unten in Fig. 7 sind beispielhaft zwei Schaltsequenz der Schalter S1 bis S4 der Leistungsstufe des Wechselrichters IN bei ausschließlicher Verwendung des Nullspannungsvektors V 14 dargestellt, die erste Sequenz HW1 entspricht einer PWM-Periode der Wechselrichterleistungsstufe aus der Netzhalbwelle, wo Phase U positives Potential gegenüber Phase V hat. Die zweite Sequenz HW2 entspricht einer PWM-Periode der Wechselrichterleistungsstufe aus der Netzhalbwelle, wo Phase V positives Potential gegenüber Phase U hat.

Fig. 8 zeigt eine Schaltungsanordnung zur Umsetzung des vorgeschlagenen Verfahrens am Beispiel eines Solarwechselrichters für mehr-phasige Netzeinspeisung. Die Erläuterungen beziehen sich einerseits auf einen Wechselrichter zur Einspeisung in ein Drehstromnetz mit 120° Phasenverschiebung zwischen den Netzphasen L1 bis L3. In Klammern ist jeweils entsprechend alternativ die Erläuterung bei Einspeisung in ein Dreileiternetz mit 180° Phasenverschiebung zwischen den Netzphasen L1 und L2 zu finden, entsprechend sind bei dieser Schaltungsanordnung die in Fig. 8 grau abgesetzten Komponenten nicht Teil der Schaltung. Eine solches Dreileiternetz ist z.B. in den USA unter dem Begriff "3-wire, single-phase, mid-point neutral system" zu finden. Die Zwischenkreisspannung des Wechselrichters IN beträgt bei Einspeisung in ein Drehstromnetz mindestens das $\sqrt{3}$ -fache der Scheitelspannung zwischen der Netzphase und dem Neutralleiter und bei Einspeisung in ein Dreileiternetz mit 180° Phasenverschiebung zwischen den Netzphasen L1 und L2 mindestens das doppelte der Scheitelspannung zwischen der Netzphase und dem Neutralleiter. Beide Netze haben Neutralleiterbezug N. Die drei (zwei) Ausgangsklemmen der Phasen U, V, W (U, V) des Wechselrichters IN, welche sinusförmige Ströme 11 bis I3 (I1, I2) in das 3-phasige (2-phasige) Netz GD mit den Phasen L1 bis L3 (L1, L2) einspeisen, sind über die LC-Glättungsglieder, gebildet aus den Induktivitäten $L_U$, $L_V$, $L_W$ ($L_U$, $L_V$) sowie den Kapazitäten $C_{UV}$, $C_{UW}$, $C_{VW}$ ($C_{UV}$), mit den Schaltern S1 bis S6 (S1-S4) sowie den Freilaufdioden D1 bis D6 (D1-D4) der Leistungsstufe des Wechselrichters IN verbunden. Die Schalter werden der Art angesteuert, dass durch die PWM der Potenziale an den Brückenmittelabgriffen $U_U$, $U_V$, $U_W$ ($U_U$, $U_V$) sinusförmige und zu den Netzphasen L1 bis L3 (L1, L2) symmetrische Ströme I1 bis I3 (I1, I2) ins Netz GD eingespeist werden. Der Solargenerator ist bezüglich seines Spannungspotenzials gegen Erde GND freischwebend und nur über die parasitäre Kapazität $C_{SR-GND}$ mit Erde GND gekoppelt. Der Solargenerator SR mit den beiden Polen +DC und -DC speist den Pufferkondensator $C_1$, aus welchem mittels der vorgeschlagenen Koppelschaltung LK durch intermittierendes Schließen der elektrischen Schalter S7a und S7b Energie auf den kapazitiven Energiespeicher $C_2$ des Spannungszwischenkreises mit den elektrischen Polen +HV und -HV des Wechselrichters IN fliest. Das Schließen und Öffnen der elektrischen Schalter S7a und S7b wird in Abhängigkeit der aktuellen Schalterstellungen der Schalter S1 bis S6 (S1-S4) der Leistungsstufe des Wechselrichters IN gesteuert. Zur Begrenzung des Stromes ist mindestens einem der Schalter S7a oder S7b eine Impedanz $Z_X$ in Reihe geschaltet. Bei Verwendung von z.B. Halbleiterleistungsschaltern kann deren inhärente Impedanz selbst genügen, und es sind keine externe verlustbehaftete Impedanzen notwendig. Des Weiteren kann auch der inhärente Widerstand (ESR) der für C1 und C2 verwendeten Kondensatoren ausreichen.

Falls die beiden Kapazitäten C1 und C2 bezogen auf die Nachladefrequenz hinreichend groß dimensioniert sind, stellt sich die Spannungsdifferenz zwischen C1 und C2 dann selbstregelnd auf den niedrigsten möglichen Wert ein, mit der die Schalter S7a und S7b, z.B. ausgebildet als Halbleiterleistungsschalter, gerade noch genügend große Ladungsträgerpakete während der Nachladezeiten leiten können. D.h., es findet eine Selbstregelung auf die für die vorgegebenen Ladungszeiten geringste mögliche Durchflussspannung der Schalter, und damit auf den höchstmöglichen Wirkungsgrad dieser vorgeschlagenen Ladeschaltung statt. Zu berücksichtigen ist auch, dass über die Schalter S7a und S7b während des Schaltvorgangs jeweils nur eine geringe Spannung abfällt, da gleichsinnige Pole der Spannungsquelle SR und des Spannungszwischenkreises also jeweils +DC und +HV sowie -DC und -HV aufgrund der vorgeschlagenen Schaltsequenz für die Schalter S1 bis S6 (S1-S4) sowie 7a und 7b beim Schaltvorgang gleiches Spannungspotenzial haben. D. h. bei der vorgeschlagenen pulsweisen Speisung des Wechselrichters IN aus der Gleichspannungsquelle SR beschränken sich die Verluste in den beiden Schaltern S7a und S7b im Wesentlichen auf die Flussspannungsverluste.

Aufgabe gemäß des vorgeschlagenen Verfahrens ist es nun, die Schalter S7a und S7b synchron zu den Schalterstellungen von S1 bis S6 (S1-S4) so zu schalten, dass über die Kapazität $C_{SR\_GND}$ zwischen Solargenerator SR und Erde GND möglichst kein Strom abfließt.

Zur Netzeinspeisung in ein 3-phasiges Netz mittels Schaltungsanordnung in Fig. 8 über eine vollständige Netzperiode werden alle 6 Spannungssektoren wie z.B. in Fig. 5 oder Fig. 6 beschrieben durchlaufen.

In Fig. 9 sind beispielhaft zwei PWM-Perioden der Wechselrichterleistungsstufe in Fig. 8 dargestellt. Für den 3-phasigen Wechselrichter sind auch die Schaltzustände der grau abgesetzten Schalter S5 und S6 relevant. In der Beschreibung ist wie in Fig. 8 in Klammern auch die Ausführung für einen Wechselrichter mit nur 2 Halbbrücken zur Netzeinspeisung in das bereits erwähnte Dreileiternetz mit 180° Phasenverschiebung zwischen den Netzphasen L1 und L2 zu finden. Es ist eine mögliche Schaltsequenz für die Schalter S1 bis S6 (S1 - S4) sowie S7a und S7b von Fig. 8 skizziert. Die Schalterstellungen sind über zwei PWM-Perioden $T_P$ der Wechselrichterleistungsstufe S1 bis S6 (S1-S4) aufgezeichnet. Die Periodendauer $T_P$ kann im Bereich 50 ... 64us liegen, um mit einer Wiederholfrequenz von > =16kHz außerhalb des Hörbereichs für das menschliche Ohr zu liegen.

Während der Zeit $T_{ZV}$ liegt der Nullspannungsvektor an, hier liegt gemäß Fig. 3 (Fig. 7) der Nullspannungsvektor V8 (V14) an. Mit kurzer Verzögerung werden während $T_{ZV}$ auch die Schalter S7a und S7b geschlossen, und kurz vor Ende des Nullspannungsvektors wieder geöffnet. Die Nullspannungsvektoren sind in diesem Schaltsequenzdiagramm mittig zur PWM-Periodendauer $T_P$ dargestellt. Der Schaltzeitpunkt der oberen Schalter S1, S3, S5 (S1, S3) zum jeweiligen zugehörigen unteren Schaltern S2, S4, S6 (S2, S4) eines Brückenzweiges der Wechselrichterleistungsstufe ist etwas versetzt, um einen überlappenden Leitendzustand der Schalter sicher zu vermeiden. Die kurze Zeit, in der beide Schalter eines Brückenzweiges offen sind, wird Totzeit genannt. In der Totzeit wird das Klemmenpotenzial $U_U$, $U_V$, $U_W$ ($U_U$, $U_V$) im jeweiligen Brückenzweig durch die Bestromung der Dioden D1 bis D6 (D1-D4) aufgrund der Stromflussrichtung der Phasenströme I1 bis I3 (I1, I2) bestimmt. Abgesehen von diesen kurzen, meist vernachlässigbaren Totzeiten, ist das Klemmenpotenzial $U_U$, $U_V$, $U_W$ ($U_U$, $U_V$) in den Halbbrücken der Wechselrichterleistungsstufe durch die Schaltzustände der Schalter S 1 bis S6 (S1-S4) bestimmt.

Für den 3-phasigen Wechselrichter verwendet die Schaltsequenz in Fig. 9 die im Spannungssektor SC3 in Fig. 5 verwendeten Spannungsvektoren V4, V3 und V8 mit entsprechend daraus resultierenden Potenzialen $U_U$, $U_V$, $U_W$ an den Halbbrücken der Wechselrichterleistungsstufe gemäß Fig. 8. In Fig. 5 ist auch das zugehörige Potenzial zwischen dem Neutralleiter N und dem Minuspol -HV des Spannungszwischenkreises in Fig. 8 aufgezeichnet. Im Nullspannungsvektor V8 entspricht das Potenzial des Minuspol -HV des Spannungszwischenkreises dem des Neutralleiters N.

Damit hat der Minuspol -DC der Quelle SR beim Nachladen der Kapazität C2 aus der Quelle SR, mit der Kapazität C1, durch das Schließen der Schalter S7a und S7b ebenfalls Neutralleiterpotenzial.

Für den Wechselrichter mit nur 2 Halbbrücken in Fig. 8 zur Netzeinspeisung in ein Dreileiternetz mit 180° Phasenverschiebung zwischen den Netzphasen L1 und L2 verwendet die Schaltsequenz in Fig. 9 die entsprechenden Spannungsvektoren V 12 und V 14 gemäß Fig. 7. Bei Anliegen des Spannungsvektors V 12 entspricht die Potenzialdifferenz zwischen dem Neutralleiter N und dem Minuspol -HV des Spannungszwischenkreises in Fig. 8 entsprechend der halben Zwischenkreisspannung des Spannungszwischenkreises des Wechselrichters IN. Im Nullspannungsvektor V 14 entspricht das Potenzial des Minuspol -HV des Spannungszwischenkreises dem des Neutralleiters N. Damit hat der Minuspol -DC der Quelle SR beim Nachladen der Kapazität C2 aus der Quelle SR, mit der Kapazität C1, durch das Schließen der Schalter S7a und S7b ebenfalls Neutralleiterpotenzial.

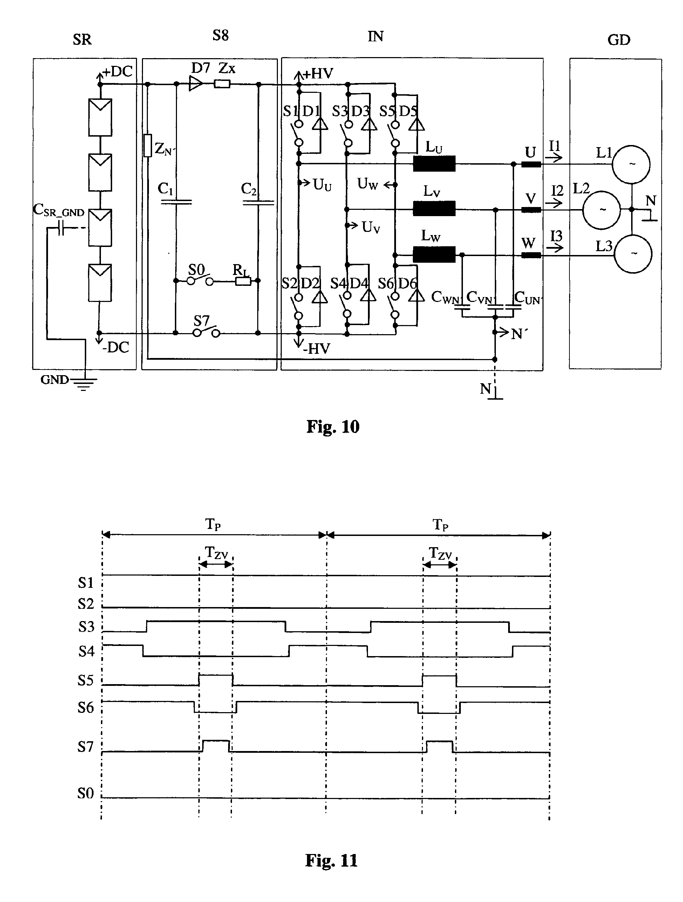

Fig. 10 zeigt eine Schaltungsanordnung, bei der der Pluspol +DC des Solargenerators SR quasi Erdleiterpotenzial GND hat. Optional könnte er über eine Impedanz $Z_{N'}$, z.B. einer Kapazität zur weiteren Reduktion der Ableitströme mit dem Sternpunkt der Filterkapazitäten $T_{UN'}$, $C_{VN'}$, $C_{WN'}$, also dem Nachgebildeten Neutralleiter N', verbunden werden, welcher wiederum optional mit dem Neutralleiter N verbunden werden kann. Falls N' und N nicht verbunden sind, könnte der Pluspol +DC auch direkt mit dem Nachgebildeten Neutralleiter N' verbunden werden. Bevor der Schalter S7 der vorgeschlagenen Kopplungsschaltung LK erstmalig schließt, wird über Schalter S0 und Ladewiderstand $R_L$ die Kapazität des Spannungszwischenkreises $C_2$ auf dieselbe Spannung wie $C_1$ vorgeladen. Da der Pluspol +DC der Quelle SR gegenüber dem Pluspol +HV des Spannungszwischenkreises des Wechselrichters IN quasi kein positives Potenzial annimmt, kann der Schalter, welcher in Fig. 8 die beiden Pluspole verbindet, durch die Diode D7 ersetzt werden. Weitere Schaltungsteile entsprechen der der Fig. 8.

Eine mögliche Sequenz von Spannungsvektoren für die Leistungsstufe mit den Schaltern S 1 bis S6 des Wechselrichters in Fig. 10 über eine Netzperiode kann in Fig. 6 entnommen werden.

Fig. 11 zeigt beispielhaft über zwei PWM-Perioden der Wechselrichterleistungsstufe eine Schaltsequenz für die Schalter S0 bis S7 in Fig. 10, nachdem der Zwischenkreiskondensator $C_2$ über den Schalter S0 vorgeladen wurde, und der Wechselrichter IN mit der Netzeinspeisung in das Netz GD begonnen hat. Während der Netzeinspeisung bleibt der Schalter S0 geöffnet. Die Schaltsequenz in Fig. 11 verwendet Spannungsvektoren wie im Spannungssektor SC1 in Fig. 6 dargestellt. In diesem Sektor liegen die Spannungsvektoren V1, V2 und V7 an. Es sind die Schaltsequenzen für zwei PWM-Perioden $T_P$ der Leistungsstufe des Wechselrichters IN mit den Schaltern S1 bis S6 skizziert. Der Schalter S7 der Kopplungsschaltung LK wird kurz nach Anliegen des Nullspannungsvektors V7 geschlossen, und kurz vor Ende der Nullspannungsvektorzeit $T_{ZV}$ wieder geöffnet.

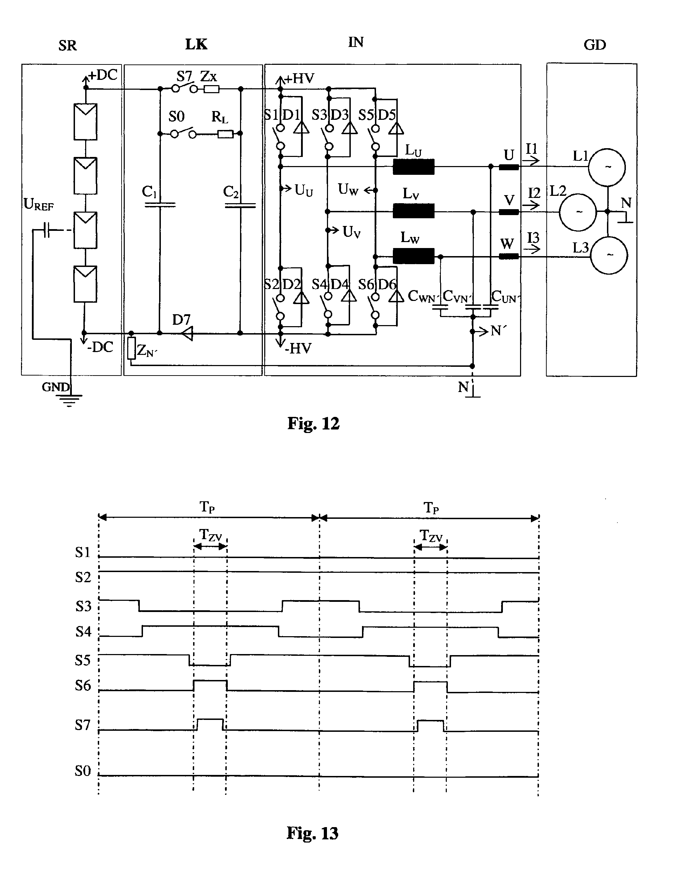

Fig. 12 zeigt eine Schaltungsanordnung, bei der der Minuspol -DC des Solargenerators SR quasi Erdleiterpotenzial GND hat. Optional könnte er über eine Impedanz $Z_{N'}$, z.B. einer Kapazität zur weiteren Reduktion der Ableitströme mit dem Sternpunkt der Filterkapazitäten $C_{UN'}$, $C_{VN'}$, $C_{WN'}$, also dem Nachgebildeten Neutralleiter N', verbunden werden, welcher wiederum optional mit dem Neutralleiter N verbunden werden könnte. Falls N' und N nicht verbunden sind, könnte der Minuspol -DC auch direkt mit dem Nachgebildeten Neutralleiter N' verbunden werden. Bevor der Schalter S7 der vorgeschlagenen Kopplungsschaltung LK erstmalig schließt, wird über Schalter S0 und Ladewiderstand $R_L$ die Kapazität des Spannungszwischenkreises $C_2$ auf dieselbe Spannung wie $C_1$ vorgeladen. Da der Minuspol -DC der Quelle SR gegenüber dem Minuspol -HV des Spannungszwischenkreises des Wechselrichters IN quasi kein negatives Potenzial annimmt, kann der Schalter, welcher in Fig. 8 die beide Minuspole verbindet, durch die Diode D7 ersetzt werden. Weitere Schaltungsteile entsprechen der in Fig. 8.

Eine mögliche Sequenz von Spannungsvektoren für die Leistungsstufe mit den Schaltern S1 bis S6 des Wechselrichters in Fig. 12 über eine Netzperiode kann in Fig. 5 entnommen werden.

Fig. 13 zeigt eine mögliche Schaltsequenz für die Schalter S0 bis S7 in Fig. 12, nachdem der Zwischenkreiskondensator $C_2$ über den Schalter S0 vorgeladen wurde, und der Wechselrichter IN mit der Netzeinspeisung in das Netz GD begonnen hat. Während der Netzeinspeisung bleibt der Schalter S0 geöffnet. Es ist dazu eine Schaltsequenz mit denselben Spannungsvektoren wie im Spannungssektor SC4 in Fig. 5 dargestellt. In diesem Sektor liegen die Spannungsvektoren V4, V5 und V8 an. Es sind die Schaltsequenzen für zwei PWM-Perioden $T_P$ der Leistungsstufe des Wechselrichters IN mit den Schaltern S 1 bis S6 skizziert. Der Schalter S7 der Kopplungsschaltung LK wird kurz nach Anliegen des Nullspannungsvektors V8 geschlossen, und kurz vor Ende der Nullspannungsvektorzeit $T_{ZV}$ wieder geöffnet.

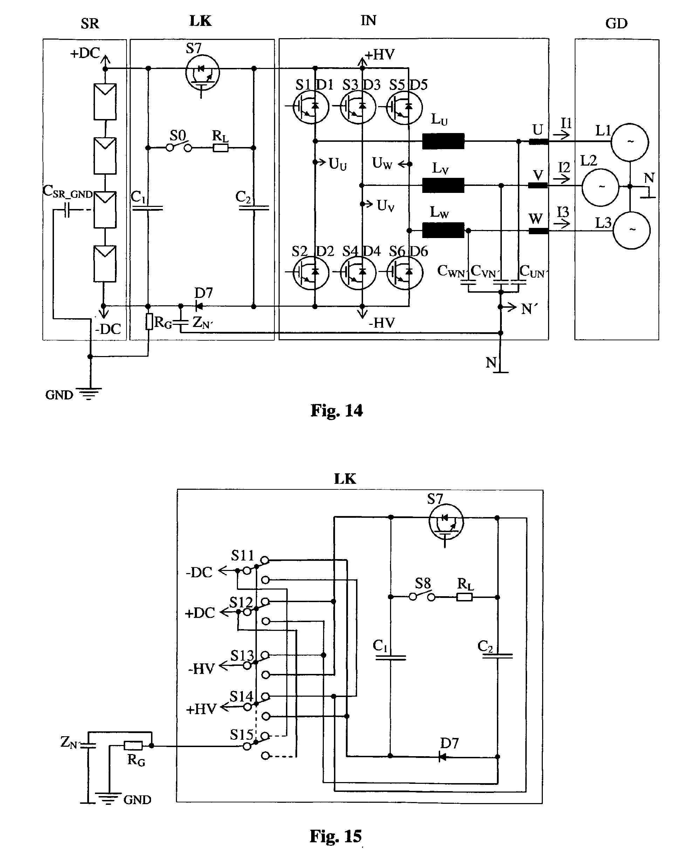

Fig. 14 entspricht der Schaltungsanordnung von Fig. 12. Schalter S1 bis S7 sind explizit mit Leistungshalbleitern mit integrierten antiparallelen Dioden ausgeführt. Schalter S0 soll mit einem Relaiskontakt ausgeführt sein. Die parasitäre Kapazität $C_{SR\_IN}$ zwischen der Quelle SR und dem Spannungszwischenkreis des Wechselrichters IN wird im Wesentlichen durch die Kapazität der Diode D7 sowie der Ausgangskapazität des Leistungshalbleiterschalters S7, dessen antiparalleler Diode, sowie nicht gezeichnet, der Ansteuerschaltung von S7 gebildet. Zwischen dem Minuspol -DC der Quelle SR und dem Nachgebildeten Neutralleiter N' sowie des damit verbundenen Neutralleiters N ist eine Kapazität $Z_{N'}$ geschaltet, deren Kapazität wesentlich größer sein soll als die der parasitären Kapazität $C_{SR\_IN}$, womit die hochfrequenten Ströme die über $C_{SR-IN}$ fließen kurzgeschlossen werden, und nicht über die parasitäre Kapazität $C_{SR-GND}$ zwischen der Quelle SR und Erde GND abfließen. Damit werden hochfrequente Spannungsschwankungen zwischen der Quelle SR und Erde GND weiter reduziert. Über einen hochohmigen Ableitwiderstand $R_G$ ist der Minuspol der Quelle -DC mit Erde GND verbunden, um zu verhindern, dass das schwebende Potenzial der Quelle, insbesondere bei Betriebsruhe des Wechselrichters, durch elektrostatische Aufladung abdriftet, und die Sperrspannung der Diode D7 oder des Schalters S7 überschritten wird.

Fig. 15 zeigt eine Option für die vorgeschlagene Koppelschaltung LK. Der Funktionsblock LK in Fig. 14 könnte z.B. durch die Schaltungsanordnung von Fig. 15 ersetzt werden. In Fig. 15 kann mittels Relaiskontakten S 11 bis S 14 optional zwischen der Schaltungsanordnung in Fig. 12 bzw. entsprechend Fig. 14 und Fig.10 umgeschaltet werden. In Ruheschaltung entspricht die Schaltungsanordnung der von Fig. 12 bzw. entsprechend Fig. 14. Optional könnte auch noch die Impedanz $Z_{N'}$ sowie der Ableitwiderstand $R_G$ mittel Relaiskontakt S15 mit umgeschaltet werden. Mit dieser Schaltung könnte also der Wechselrichter IN vor Ort an die Eigenschaften der Quelle SR angepasst werden. Bei einem Solarwechselrichter könnte z.B. bei Verwendung von Solarzellen in Dünnschichttechnik die Schalter S11 bis S 14 in Ruheposition verbleiben, damit die Solarzellen positives Potenzial gegenüber der Erde GND haben. Bei Rückseitenkontaktzellen könnten die Relaiskontakte entsprechend umgeschaltet werden, damit die Solarzellen ein negatives Potenzial gegenüber der Erde GND und damit gegenüber dem Solarmodulrahmen haben. Da die schaltungstechnische Position der Kapazitäten C1 und C2 durch eine Umschaltung auch getauscht wird, ist eine Verwendung gleichwertiger Kondensatoren vorteilhaft.

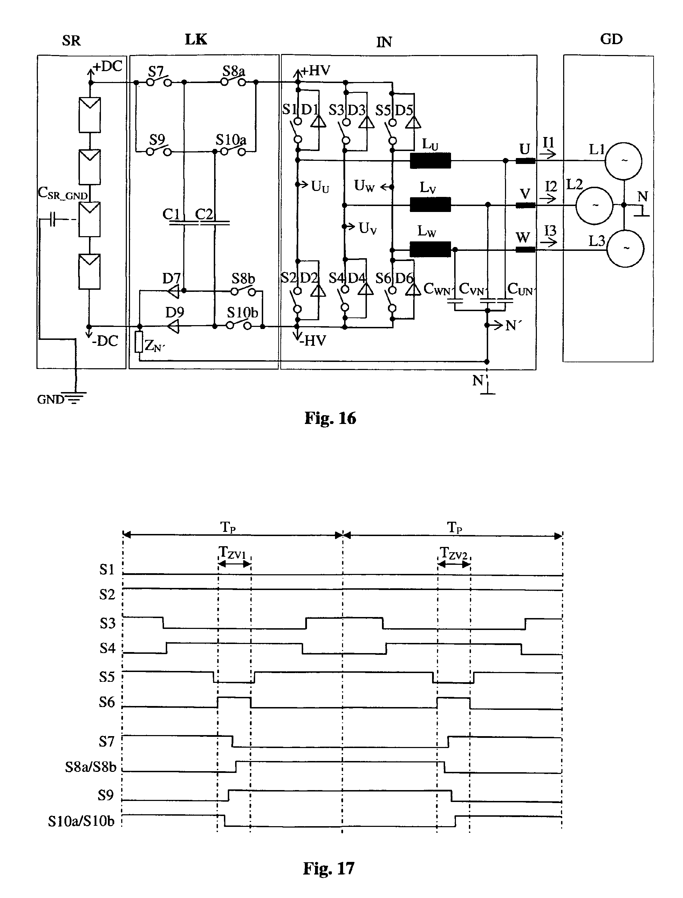

In Fig. 16, Fig. 18, Fig. 20, Fig. 22, Fig. 24 werden Schaltungsanordnungen vorgestellt, die sich zur Umsetzung des vorgeschlagenen Verfahrens auch bei Wechselrichtern zur einphasigen Netzeinspeisung eignen. Bezüglich der Wirkungsgradbetrachtung muss auch hier berücksichtigt werden, dass die Schalter der vorgeschlagenen Koppelschaltung LK mit sehr geringen Schaltverlusten betrieben werden können, da jeder Schalter quasi spannungslos (ZVS) bzw. stromlos (ZCS) schaltet. S8 und S10 stehen jeweils für zwei Schalter S8a und S8b bzw. S10a und S10b, die jeweils synchron geschalten werden.

Fig. 16 zeigt eine Schaltungsanordnung bei der der Minuspol -DC der Quelle SR quasi Erdleiterpotenzial GND hat. Optional könnte er über eine Impedanz $Z_{N'}$, z.B. einer Kapazität zur weiteren Reduktion der Ableitströme mit dem Sternpunkt der Filterkapazitäten $C_{UN'}$, $C_{VN'}$, $C_{WN'}$, also dem Nachgebildeten Neutralleiter N', verbunden werden, welcher wiederum optional mit dem Neutralleiter N verbunden werden könnte. Falls N' und N nicht verbunden sind, könnte der Minuspol -DC auch direkt mit dem Nachgebildeten Neutralleiter N' verbunden werden. Bei dieser Schaltungsanordnung erfolgt der Transport der Ladungsträgerpakete durch den zyklischen Tausch der Kapazitäten $C_1$ und $C_2$ zwischen der solar gespeister Gleichspannungsquelle SR und dem Spannungszwischenkreis des 3-phasigen Wechselrichters IN. Der Tausch kann hochfrequent bei jedem V8 Nullspannungsvektor der Leistungsstufe des Wechselrichters IN mit den Schaltern S1 bis S6 erfolgen kann, dadurch können kleinere Kapazitätswerte für $C_1$ und $C_2$ eingesetzt werden. Bevor der reguläre Betrieb beginnt, können ähnlich wie in Fig. 10 mittels S0 dargestellt, die Kapazitäten $C_1$ und $C_2$ vorgeladen werden, falls man das Kurzschließen des Solargenerators beim anfänglichen Ladevorgang der Kapazitäten vermeiden möchte. Ausgenommen der Koppelschaltung LK entspricht Fig. 16 der von Fig. 8 und es kann die dortige Beschreibung mit herangezogen werden.

Eine mögliche Sequenz von Spannungsvektoren für die Leistungsstufe mit den Schaltern S1 bis S6 des Wechselrichters in Fig. 16 über eine Netzperiode kann in Fig. 5 entnommen werden.

Fig. 17 zeigt eine mögliche Schaltsequenz für die Schaltungsanordnung gemäß Fig. 16 zur Umsetzung des Ladungsträgerpaket-Transports mittels der Kapazitäten $C_1$ und $C_2$:

Die Periodendauer $T_P$ kann im Bereich 50 ... 64us liegen, um mit einer Wiederholfrequenz von > = 6kHz außerhalb des Hörbereichs für das menschliche Ohr zu liegen.

Die PWM-Generierung für die Wechselrichterleistungsstufe mit den Schaltern S1 bis S6 erfolgt unter dem Einsatz von V8 Nullspannungsvektoren. In den beiden dargestellten PWM-Perioden werden zur Spannungsgenerierung noch die Vektoren V4 und V5 gemäß Spannungssektor SC4 in Fig. 5 eingesetzt.

Neuartig ist die Funktion und das Schaltverhalten der Schalter S7 bis S10 während der Zeit, in der für die Schalter S1 bis S6 der Nullspannungsvektor anliegt, wo wie bereits erläutert alle Phasen U, V, W auf einen Pol des Spannungszwischenkreises geschaltet sind. In diesem Fall sind die Schalter S2, S4, S6 im Nullspannungsvektor geschlossen d. h. die Potenziale $U_U$, $U_V$, $U_W$ der 3 Phasen entsprechen dem Potenzial des Minuspols -HW des Spannungszwischenkreises des Wechselrichters IN. Die in die Filterdrosseln $L_U$, $L_V$, $L_W$ eingeprägten Wechselrichterausgangsströme I1 bis I3 fliesen dann jeweils, je noch aktueller Stromflussrichtung in den einzelnen Phasen U, V, W, in diesem Nullspannungsvektor über die zugehörigen Schalter S2, S4, S6 oder über die antiparallelen Dioden D2, D4, D6.

Die Schaltsequenz der Schalter S1 bis S10 in Fig. 17 verläuft wie folgt beschrieben. Während der V8 Nullspannungsvektor anliegt, werden die Kapazitäten $C_1$ und $C_2$ zyklisch getauscht. Die Beschreibung beginnt mit dem Beginn des ersten Nullspannungsvektor $T_{ZV1}$. Die nachfolgend beschriebenen Schritte 1. bis 10. wiederholen sich zyklisch.

    1. Über die Schalter S10a und S10b, welche synchron schalten, wird der Spannungszwischenkreis des Wechselrichters IN von $C_2$ getrennt.

    2. Über S9 wird der Solargenerator SR mit $C_2$ verbunden, da $C_2$ durch die Speisung des Wechselrichters IN Ladung verloren hat, ist seine Spannung kleiner als die von $C_1$. Die Diode D7 und der geöffnete Schalter S10b verhindern in diesem Fall einen Kurzschluss zwischen den Kondensatoren $C_1$ und $C_2$.

    3. Über S7 wird $C_1$ vom Solargenerator SR getrennt.

    4. Über die Schalter S8a und S8b, welche synchron schalten, wird der Kondensator $C_1$ dann mit dem Spannungszwischenkreis des Wechselrichters IN verbunden.

    5. Danach wird ein PWM-Zyklus mit den entsprechenden Schaltvorgängen der Schalter S3 bis S6 der Leistungsstufe durchlaufen bis zum nächsten Nullspannungsvektor $T_{ZV2}$. Im Nullspannungsvektor $T_{ZV2}$ werden die Kondensatoren dann wieder getauscht analog zur Beschreibung 1.- 4. für den Nullspannungsvektor $T_{ZV1}$, also wie folgt:

    6. Über S8a und S8b wird der Spannungszwischenkreis des Wechselrichters IN von $C_1$ getrennt.

    7. Über S7 wird die Quelle SR mit $C_1$ verbunden, da $C_1$ durch die Speisung des Wechselrichters IN Ladung verloren hat, ist seine Spannung kleiner als die von $C_2$. Die Diode D9 und der geöffnete Schalter S8b verhindern in diesem Fall einen Kurzschluss zwischen den Kondensatoren $C_1$ und $C_2$.

    8. Über S9 wird $C_2$ vom Solargenerator SR getrennt.

    9. Über S10a und S10b wird der Kondensator $C_2$ dann mit dem Spannungszwischenkreis des Wechselrichters IN verbunden.

    10. Danach wird ein PWM-Zyklus durchlaufen bis zum nächsten Nullspannungsvektor $T_{ZV1}$.

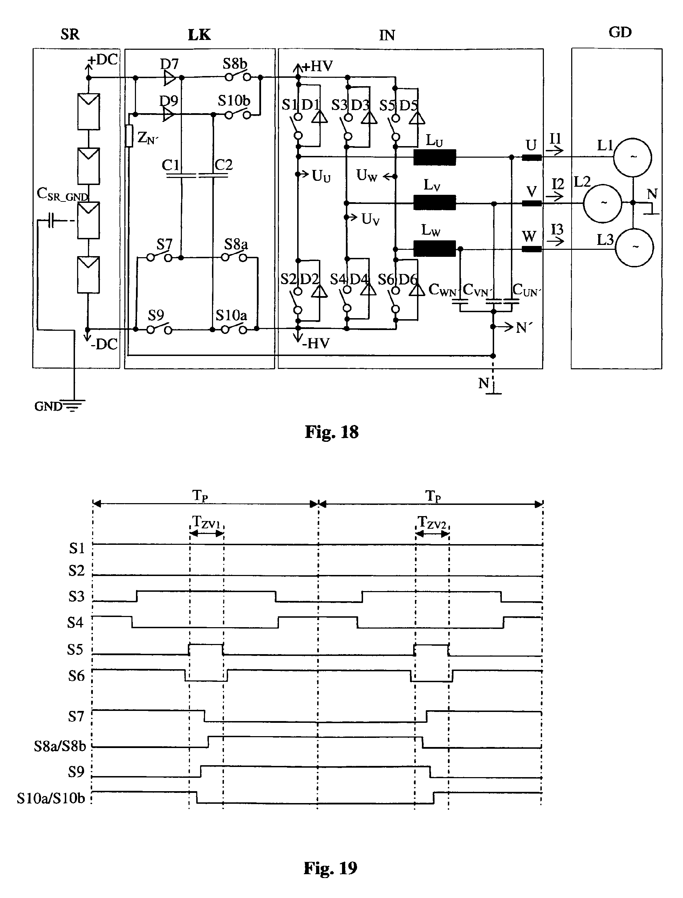

Fig. 18 zeigt eine Schaltungsanordnung, bei der der Pluspol +DC der Quelle SR quasi Erdleiterpotenzial GND hat. Optional könnte er über eine Impedanz $Z_{N'}$, z.B. einer Kapazität zur weiteren Reduktion der Ableitströme mit dem Sternpunkt der Filterkapazitäten $C_{UN'}$, $C_{VN'}$, $C_{WN'}$, also dem Nachgebildeten Neutralleiter N', verbunden werden, welcher wiederum optional mit dem Neutralleiter N verbunden werden könnte. Falls N' und N nicht verbunden sind, könnte der Pluspol +DC auch direkt mit N' verbunden werden. Bei dieser Schaltungsanordnung erfolgt der Transport der Ladungsträgerpakete durch den zyklischen Tausch der Kapazitäten $C_1$ und $C_2$ zwischen der solar gespeister Gleichspannungsquelle SR und dem Spannungszwischenkreis des 3-phasigen Wechselrichters IN. Der Tausch kann hochfrequent bei jedem V7 Nullspannungsvektor der Leistungsstufe des Wechselrichters IN mit den Schaltern S1 bis S6 erfolgen. Bevor der reguläre Betrieb beginnt, können ähnlich wie in Fig. 10 mittels S0 dargestellt, die Kapazitäten $C_1$ und $C_2$ vorgeladen werden, falls man das Kurzschließen des Solargenerators beim anfänglichen Ladevorgang der Kapazitäten vermeiden möchte. Ausgenommen der Koppelschaltung LK entspricht Fig. 16 der von Fig. 8 und es kann die dortige Beschreibung mit herangezogen werden.

Eine mögliche Sequenz von Spannungsvektoren für die Leistungsstufe mit den Schaltern S1 bis S6 des Wechselrichters in Fig. 18 über eine Netzperiode kann in Fig. 6 entnommen werden.

Fig. 19 zeigt eine mögliche Schaltsequenz für die Schaltungsanordnung gemäß Fig. 18 zur Umsetzung des Ladungsträgerpaket-Transports mittels der Kapazitäten $C_1$ und $C_2$.

Die PWM-Generierung für die Wechselrichterleistungsstufe mit den Schaltern S1 bis S6 erfolgt unter dem Einsatz von V7 Nullspannungsvektoren. In den beiden dargestellten PWM-Perioden werden zur Spannungsgenerierung noch die Vektoren V1 und V2 gemäß Spannungssektor SC1 in Fig. 6 eingesetzt.

Neuartig ist die Funktion und das Schaltverhalten der Schalter S7 bis S10 während der Zeit, in der für die Schalter S 1 bis S6 der Nullspannungsvektor anliegt, wo wie bereits erläutert alle Phasen U, V, W auf einen Pol des Spannungszwischenkreises geschaltet sind. In diesem Fall sind die Schalter S1, S3, S5 im Nullspannungsvektor geschlossen. Die in die Filterdrosseln $L_U$, $L_V$, $L_W$ eingeprägten Wechselrichterausgangsströme I1 bis I3 fliesen dann jeweils, je nach aktueller Stromflussrichtung in den einzelnen Phasen U, V, W, in diesem Nullspannungsvektor über die zugehörigen Schalter S1, S3, S5 oder über die antiparallelen Dioden D1, D3, D5.

Die Schaltsequenz der Schalter S1 bis S10 in Fig. 19 verläuft wie folgt beschrieben. Während der V7 Nullspannungsvektor anliegt, werden die Kapazitäten $C_1$ und $C_2$ zyklisch getauscht. Die Beschreibung beginnt mit dem Eintritt in den Nullspannungsvektor $T_{ZV1}$. Die nachfolgend beschriebenen Schritte 1. bis 10. wiederholen sich zyklisch.

    1. Über die Schalter S10a und S10b, welche synchron schalten, wird der Spannungszwischenkreis des Wechselrichters IN von $C_2$ getrennt.

    2. Über S9 wird die Quelle SR mit $C_2$ verbunden, da $C_2$ durch die Speisung des Wechselrichters IN Ladung verloren hat, ist seine Spannung kleiner als die von $C_1$. Die Dioden D7 und der geöffnete Schalter S10b verhindern in diesem Fall einen Kurzschluss zwischen den Kondensatoren $C_1$ und $C_2$.

3. Über S7 wird $C_1$ von der Quelle SR getrennt.

4. Über die Schalter S8a und S8b, welche synchron schalten, wird der Kondensator $C_1$ dann mit dem Spannungszwischenkreis des Wechselrichters IN verbunden.

5. Danach wird ein PWM-Zyklus mit den entsprechenden Schaltvorgängen für S3 bis S6 durchlaufen bis zum nächsten Nullspannungsvektor $T_{ZV2}$. Im Nullspannungsvektor $T_{ZV2}$ werden die Kondensatoren dann wieder getauscht analog zur Beschreibung 1.- 4. für den Nullspannungsvektor $T_{ZV1}$, also wie folgt:

6. Über S8a und S8b wird der Spannungszwischenkreis des Wechselrichters IN von $C_1$ getrennt.

7. Über S7 wird die Quelle SR mit $C_1$ verbunden, da $C_1$ durch die Speisung des Wechselrichters IN Ladung verloren hat, ist seine Spannung kleiner als die von $C_2$. Die Diode D9 und der geöffnete Schalter S8b verhindern in diesem Fall einen Kurzschluss zwischen den Kondensatoren $C_1$ und $C_2$.

8. Über S9 wird $C_2$ vom Solargenerator SR getrennt.

9. Über S10a und S10b wird der Kondensator $C_2$ dann mit dem Spannungszwischenkreis des Wechselrichters IN verbunden.

10. Danach wird ein PWM-Zyklus durchlaufen bis zum nächsten Nullspannungsvektor $T_{ZV1}$.

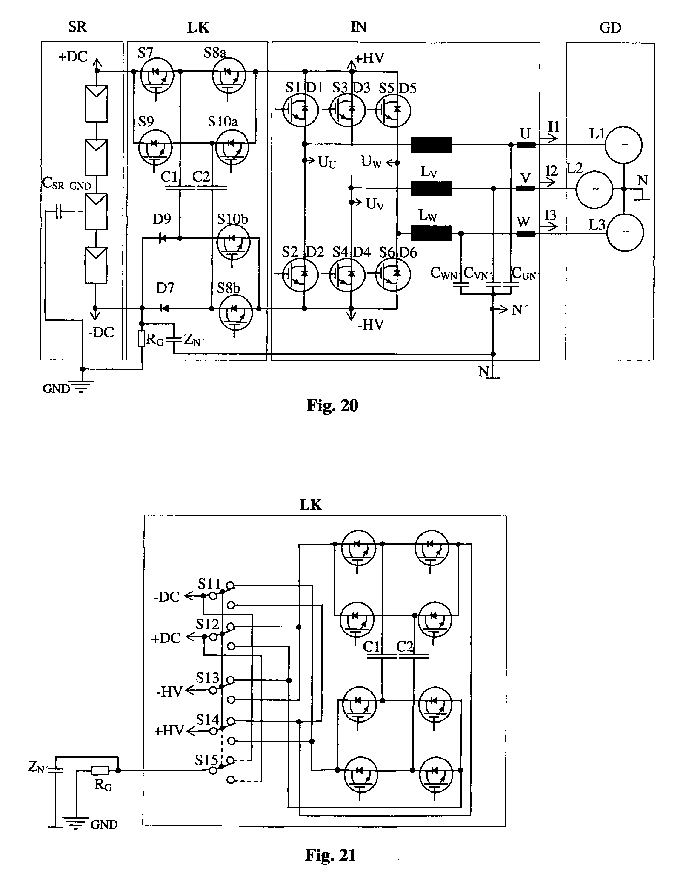

Fig. 20 entspricht der Schaltungsanordnung von Fig. 16, die Schalter sind explizit mit Leistungshalbleitern mit integrierten antiparallelen Dioden ausgeführt. Zwischen dem Minuspol der Quelle SR und dem Nachgebildeten Neutralleiter N' sowie dem damit verbundenen Neutralleiter N ist eine Kapazität $Z_N$ geschaltet, deren Kapazität wesentlich größer sein soll als die der parasitären Kapazität $C_{SR\_IN}$, welche im Wesentlichen durch die Schalter und Dioden der Koppelschaltung LK gebildet wird, womit die hochfrequenten Ströme die über $C_{SR\_IN}$ fließen kurzgeschlossen werden, und nicht über die parasitäre Kapazität $C_{SR\_GND}$ zwischen der Quelle SR und Erde GND abfließen. Damit werden hochfrequente Spannungsschwankungen zwischen der Quelle SR und Erde GND weiter reduziert. Über einen hochohmigen Ableitwiderstand $R_G$ ist der Minuspol der Quelle -DC mit Erde GND verbunden, um zu verhindern, dass das schwebende Potenzial der Quelle, insbesondere bei Betriebsruhe des Wechselrichters, durch elektrostatische Aufladung abdriftet, und die Sperrspannung der Diode D7 bzw. D9 oder der Schalter S7 bis S10 überschritten wird.

Fig. 21 zeigt eine Option für die vorgeschlagene Koppelschaltung LK. Der Funktionsblock LK in Fig. 20 könnte z.B. durch die Schaltung von Fig. 21 ersetzt werden. In Fig. 21 kann mittels Relaiskontakten S11 bis S 14 optional zwischen der Schaltungsanordnung in Fig. 16 bzw. entsprechend Fig. 20 und Fig. 18 umgeschaltet werden. In Ruheschaltung entspricht die Schaltungsanordnung der von Fig.16 bzw. entsprechend Fig. 20. Optional könnte auch noch die Impedanz $Z_{N'}$ sowie der Ableitwiderstand $R_G$ mittel Relaiskontakt S 15 mit umgeschaltet werden. Mit dieser Schaltung könnte also der Wechselrichter IN vor Ort an die Eigenschaften der Quelle SR angepasst werden. Bei einem Solarwechselrichter könnte z.B. bei Verwendung von Solarzellen in Dünnschichttechnik die Schalter S11 bis S 14 in Ruheposition verbleiben, damit die Solarzellen positives Potenzial gegenüber der Erde GND haben. Bei Rückseitenkontaktzellen könnten die Relaiskontakte entsprechend umgeschaltet werden, damit die Solarzellen ein negatives Potenzial gegenüber der Erde GND und damit gegenüber den Solarmodulrahmen haben.

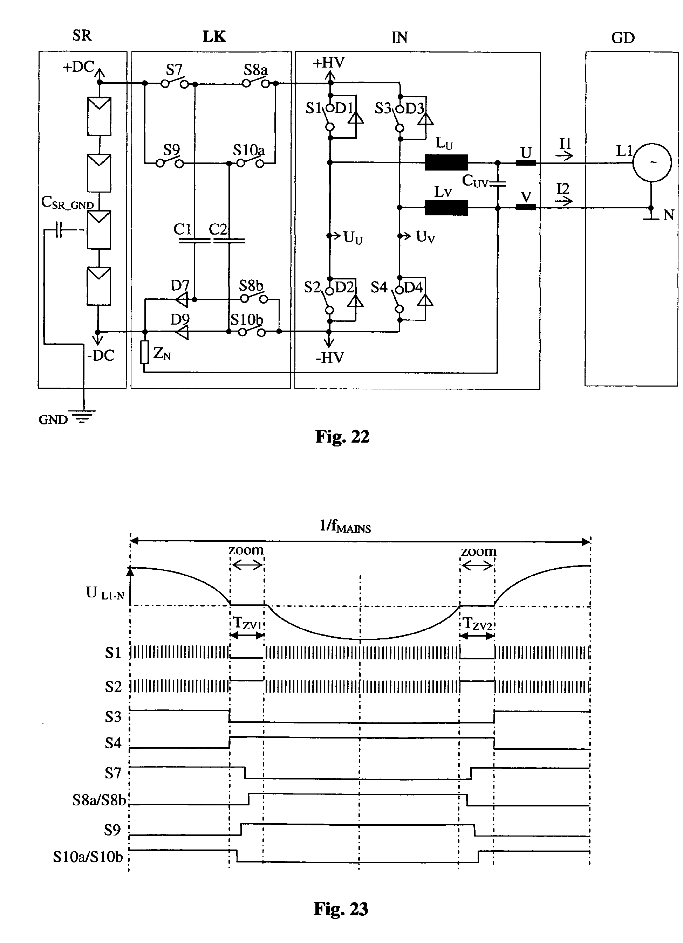

Fig. 22 zeigt eine Schaltungsanordnung bei der der Transport der Ladungsträgerpakete durch den zyklischen Tausch der Kapazitäten $C_1$ und $C_2$ zwischen der solar gespeister Gleichspannungsquelle SR und dem Spannungszwischenkreis eines Wechselrichters IN zur einphasigen Netzeinspeisung erfolgt. Der Tausch erfolgt nur bei Netzspannungsnulldurchgang, daher müssen für die beiden Kapazitäten C1 und C2 sehr hohe Kapazitätswerte vorgehalten werden. Bevor der reguläre Betrieb beginnt, können ähnlich wie in Fig. 10 mittels S0 dargestellt die Kapazitäten $C_1$ und $C_2$ vorgeladen werden, falls man das Kurzschließen des Solargenerators beim anfänglichen Ladevorgang der Kapazitäten vermeiden möchte. Der Minuspol - DC der Quelle SR hat quasi Erdleiterpotenzial GND. Optional könnte er über eine Impedanz $Z_N$, z.B. einer Kapazität zur weiteren Reduktion der Ableitströme mit Phase V des Wechselrichters und damit dem Neutralleiter N verbunden werden.

Fig. 23 zeigt eine mögliche Schaltsequenz für die Schaltungsanordnung gemäß Fig. 22 zur Umsetzung des Ladungsträgerpaket-Transports mittels der Kapazitäten $C_1$ und $C_2$. Die Periodendauer der Frequenz des Wechselspannungsnetzes, in das der Wechselrichter IN einspeist, ist mit $1/f_{MAINS}$ dargestellt, wobei die Netzfrequenz $f_{MAINS}$ typischerweise 50 oder 60Hz beträgt. $U_{L1-N}$ entspricht der Spannung zwischen der Netzphase L1 und Neutralleiter N. Im Bereich des Netzspannungsnulldurchgangs ist ein Nullspannungsvektor vergrößert dargestellt, bei dem beide Phasen U und V auf den Minuspol -HV geschaltet sind, gemäß Fig. 7 als Nullspannungsvektor V 14 bezeichnet. Während dieses Nullspannungsvektors erfolgt dann der Tausch der Kapazitäten C1 und C2. Neuartig ist die Funktion und das Schaltverhalten der Schalter S7 bis S 10 während der Zeit, in der für die Schalter S 1 bis S4 der Nullspannungsvektor anliegt, wo wie bereits erläutert, beide Phasen U und V auf einen Pol des Spannungszwischenkreises geschaltet sind. In diesem Fall sind die Schalter S2 und S4 im Nullspannungsvektor geschlossen. D. h. die in die Filterdrosseln $L_U$ und $L_V$ eingeprägten Wechselrichterausgangsströme I1 und I2 fliesen je noch aktueller Stromflussrichtung in den einzelnen Phasen in diesem Nullspannungsvektor über die Schalter S2 bzw.S4 oder über die zugehörigen antiparallelen Dioden D2 bzw. D4.

Die Schaltsequenz der Schalter S1 bis S4 und S7 bis S 10 in Fig. 23 verläuft wie folgt beschrieben. Während der V 14 Nullspannungsvektor anliegt, werden die Kapazitäten $C_1$ und $C_2$ in den Netzspannungsnulldurchgängen zyklisch getauscht. Die Beschreibung beginnt mit dem Eintritt in den Nullspannungsvektor $T_{ZV1}$. Die nachfolgend beschriebenen Schritte 1. bis 10. wiederholen sich zyklisch.

1. Über die Schalter S10a und S10b, welche synchron schalten, wird der Spannungszwischenkreis des Wechselrichters IN von $C_2$ getrennt.

2. Über S9 wird die Quelle SR mit $C_2$ verbunden, da $C_2$ durch die Speisung des Wechselrichters IN Ladung verloren hat, ist seine Spannung kleiner als die von $C_1$. Die Diode D7 und der geöffnete Schalter S10b verhindern in diesem Fall einen Kurzschluss zwischen den Kondensatoren $C_1$ und $C_2$.

3. Über S7 wird $C_1$ von der Quelle SR getrennt.

4. Über die Schalter S8a und s8b, welche synchron schalten, wird der Kondensator $C_1$ dann mit dem Spannungszwischenkreis des Wechselrichters IN verbunden.

5. Danach wird eine halbe Netzperiode durchlaufen bis zum Nullspannungsvektor $T_{ZV2}$ im nächsten Netzspannungsnulldurchgang. Zwischen den Netzspanungsnulldurchgängen mit negativer Spannung von L1 wird hier die Wechselrichterausgangsspannung mit den Spannungsvektoren V11 und V 14 gemäß Fig. 7 generiert. Im Nullspannungsvektor $T_{ZV2}$ werden die Kondensatoren dann wieder getauscht analog zur Beschreibung 1.- 4. für den Nullspannungsvektor $T_{ZV1}$, also wie folgt:

6. Über S8a und S8b wird der Spannungszwischenkreis des Wechselrichters IN von $C_1$ getrennt.

7. Über S7 wird der Solargenerator SR mit $C_1$ verbunden, da $C_1$ durch die Speisung des Wechselrichters IN Ladung verloren hat, ist seine Spannung kleiner als die von $C_2$. Die Diode D9 und der geöffnete Schalter S8b verhindern in diesem Fall einen Kurzschluss zwischen den Kondensatoren $C_1$ und $C_2$.

8. Über S9 wird $C_2$ von der Quelle SR getrennt.

9. Über S10a und S10b wird der Kondensator $C_2$ dann mit dem Spannungszwischenkreis des Wechselrichters IN verbunden.

10. Danach wird eine halbe Netzperiode bis zum Nullspannungsvektor Tzv1 im nächsten Netzspannungsnulldurchgang durchlaufen. Zwischen den Netzspanungsnulldurchgängen mit positiver Spannung von L1 wird hier die Wechselrichterausgangsspannung mit den Spannungsvektoren V 12 und V13 gemäß Fig. 7 generiert.

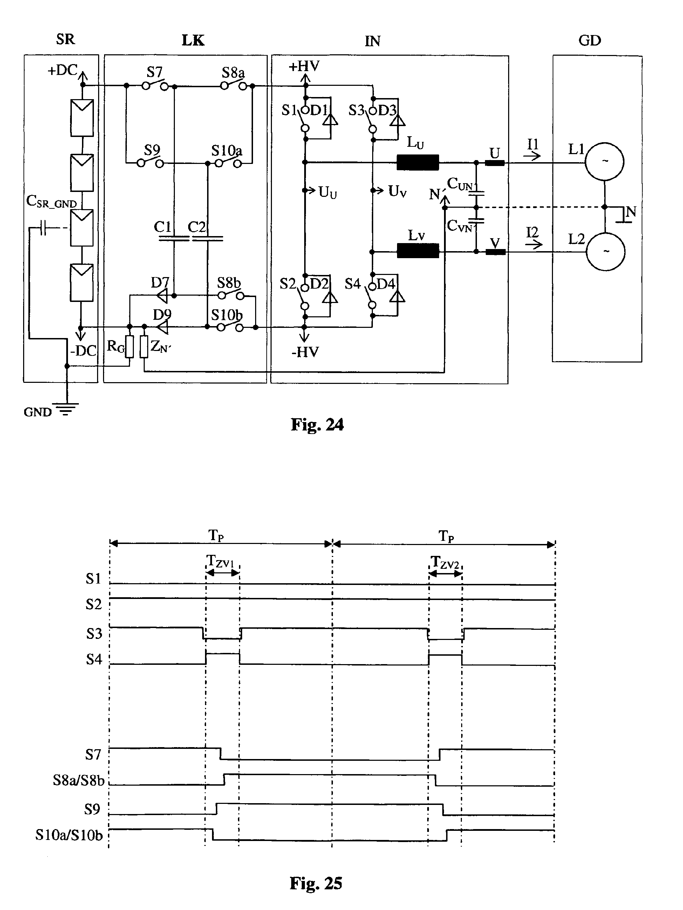

Fig. 24 zeigt eine Schaltungsanordnung, bei der der Transport der Ladungsträgerpakete durch den zyklischen Tausch der Kapazitäten $C_1$ und $C_2$ zwischen der solar gespeister Gleichspannungsquelle SR und dem Spannungszwischenkreis eines Wechselrichters IN zur Einspeisung in ein Dreileiternetz mit 180° Phasenverschiebung zwischen den Netzphasen L1 und L2 erfolgt. Hier wird der Schaltzustand bei dem beide Phasen U und V auf den Minuspol -HV geschaltet werden gemäß Fig. 7 auch als V14 Nullspannungsvektor bezeichnet. Da der Tausch hochfrequent bei jedem V 14 Nullspannungsvektor der Leistungsstufe des Wechselrichters IN mit den Schaltern S1 bis S4 erfolgen kann, können im Gegensatz zu Wechselrichtern für die einphasige Netzeinspeisung viel kleine Kapazitätswerte für $C_1$ und $C_2$ eingesetzt werden. Bevor der reguläre Betrieb beginnt, können ähnlich wie in Fig. 10 mittels S0 dargestellt die Kapazitäten $C_1$ und $C_2$ vorgeladen werden, falls man das Kurzschließen des Solargenerators beim anfänglichen Ladevorgang der Kapazitäten vermeiden möchte. Der Minuspol -DC der Quelle SR hat quasi Erdleiterpotenzial GND. Optional könnte er über eine Impedanz $Z_{N'}$, z.B. einer Kapazität zur weiteren Reduktion der Ableitströme mit dem Mittelpunkt der gleichwertigen Filterkapazitäten $C_{UN'}$, $C_{VN'}$, also dem Nachgebildeten Neutralleiter N', verbunden werden, welcher wiederum optional mit dem Neutralleiter N verbunden werden könnte. Falls N' und N nicht verbunden sind, könnte der Minuspol -DC auch direkt mit dem Nachgebildeten Neutralleiter N' verbunden werden. Falls die Impedanz $Z_{N'}$ keine ohmsche Anteile hat, oder auch bei getrenntem Neutralleiteranschluss sichergestellt werden soll, dass die Sperrspannung der Schalter und Dioden in der Koppelschaltung LK durch elektrostatische Aufladung der Solarmodule nicht überschritten wird, kann der Minuspol -HV der Quelle SR durch einen hochohmigen Widerstand $R_G$ mit Erde GND verbunden werden.

Fig. 25 zeigt eine mögliche Schaltsequenz für die Schaltungsanordnung gemäß Fig. 24 zur Umsetzung des Ladungsträgeipaket-Transports mittels der Kapazitäten $C_1$ und $C_2$:

Die Periodendauer $T_P$ ist die Periodendauer eines PWM-Zyklus der Wechselrichterleistungsstufe. Diese Periodendauer kann im Bereich 50 ... 64us liegen, um mit einer Wiederholfrequenz von > =16kHz außerhalb des empfindlichen Hörbereichs für das menschliche Ohr zu liegen.

Das Pulsweiten-Modulationsverfahren für die Wechselrichterleistungsstufe mit den Schaltern S1 bis S4 erfolgt unter dem Einsatz von V 14 Nullspannungsvektoren. Neuartig ist die Funktion und das Schaltverhalten der Schalter S7 bis S10 während der Zeit, in der für die Schalter S1 bis S4 der Nullspannungsvektor anliegt, wo wie bereits erläutert beide Phasen U und V auf einen Pol des Spannungszwischenkreises geschaltet sind. In diesem Fall sind die Schalter S2 und S4 im Nullspannungsvektor geschlossen. D. h. die in die Filterdrosseln $L_U$ und $L_V$ eingeprägten Wechselrichterausgangsströme I1 und I2 fliesen je noch aktueller Stromflussrichtung in den einzelnen Phasen in diesem Nullspannungsvektor über die Schalter S2 bzw. S4 oder über die zugehörigen antiparallelen Dioden D2 bzw. D4.

Die Schaltsequenz der Schalter S1 bis S4 und S7 bis S10 in Fig. 25 verläuft wie folgt beschrieben. Während der V14 Nullspannungsvektor anliegt, werden die Kapazitäten $C_1$ und $C_2$ zyklisch getauscht. Die Beschreibung beginnt mit dem Eintritt in den Nullspannungsvektor $T_{ZV1}$. Die nachfolgend beschriebenen Schritte 1. bis 10. wiederholen sich zyklisch.

1. Über die Schalter S10a und S10b, welche synchron schalten, wird der Spannungszwischenkreis des Wechselrichters IN von $C_2$ getrennt.

2. Über S9 wird der Solargenerator SR mit $C_2$ verbunden, da $C_2$ durch die Speisung des Wechselrichters IN Ladung verloren hat, ist seine Spannung kleiner als die von $C_1$. Die Diode D7 und der geöffnete Schalter S10b verhindern in diesem Fall einen Kurzschluss zwischen den Kondensatoren $C_1$ und $C_2$.

3. Über S7 wird $C_1$ vom Solargenerator SR getrennt.

4. Über die Schalter S8a und S8b, welche synchron schalten, wird der Kondensator $C_1$ dann mit dem Spannungszwischenkreis des Wechselrichters IN verbunden.

5. Danach wird ein PWM-Zyklus mit den entsprechenden Schaltvorgängen der Schalter S3 und S4 der Leistungsstufe durchlaufen bis zum nächsten Nullspannungsvektor $T_{ZV2}$. Im Nullspannungsvektor $T_{ZV2}$ werden die Kondensatoren dann wieder getauscht analog zur Beschreibung 1.- 4. für den Nullspannungsvektor $T_{ZV1}$, also wie folgt:

6. Über S8a und S8b wird der Spannungszwischenkreis des Wechselrichters IN von $C_1$ getrennt.

7. Über S7 wird der Solargenerator SR mit $C_1$ verbunden, da $C_1$ durch die Speisung des Wechselrichters IN Ladung verloren hat, ist seine Spannung kleiner als die von $C_2$. Die Diode D9 und der geöffnete Schalter S8b verhindern in diesem Fall einen Kurzschluss zwischen den Kondensatoren $C_1$ und $C_2$.

8. Über S9 wird $C_2$ vom Solargenerator SR getrennt.

9. Über S10a und s10b wird der Kondensator $C_2$ dann mit dem Spannungszwischenkreis des Wechselrichters IN verbunden.

10. Danach wird ein PWM-Zyklus durchlaufen bis zum nächsten Nullspannungsvektor $T_{ZV1}$.

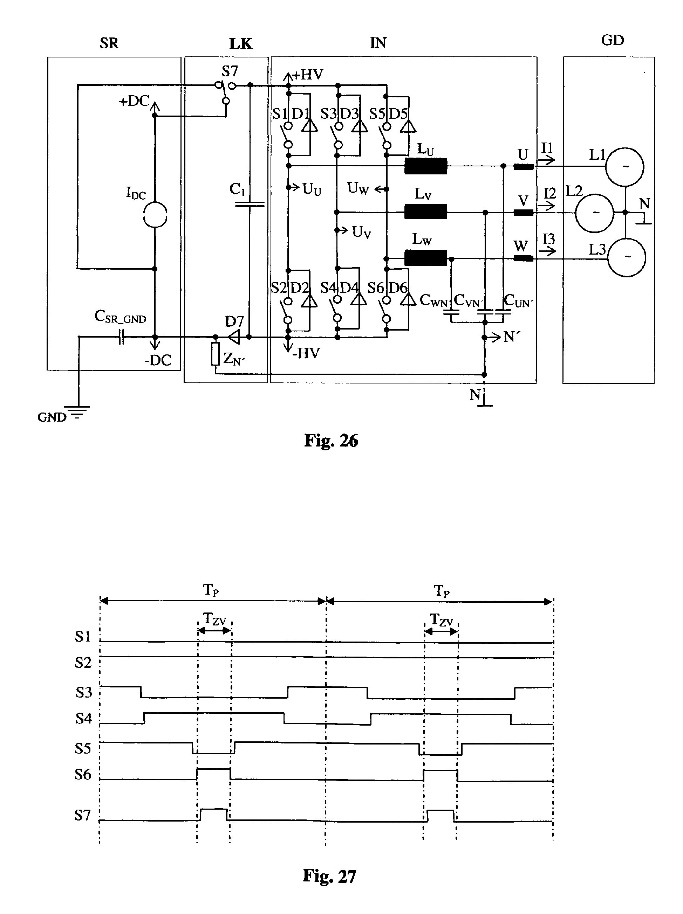

Fig. 26 zeigt schematische eine Schaltungsanordnung zur Speisung des Spannungszwischenkreises des Wechselrichters aus einer Gleichstromquelle. Der Schalter S7 wird nur im Nullspannungsvektor V8 der Schalter S1 bis S6 des 3-phasigen Wechselrichters IN umgeschaltet. Der Minuspol der Stromquelle SR bleibt damit auf Neutralleiterbezug N. Die Ableitströme über die Kapazität $C_{SR\_GND}$ werden damit minimiert.

Fig. 27 zeigt die Abfolge der möglichen Schaltzustände der Schalter für die Schaltungsanordnung in Fig. 26. In den V8 Nullspannungsvektoren wird der Schalter S7 umgeschaltet. Damit kann während des Nullspannungsvektors Strom von der Stromquelle SR auf den Spannungszwischenkreis mit der Kapazität C1 des Wechselrichters IN fließen.

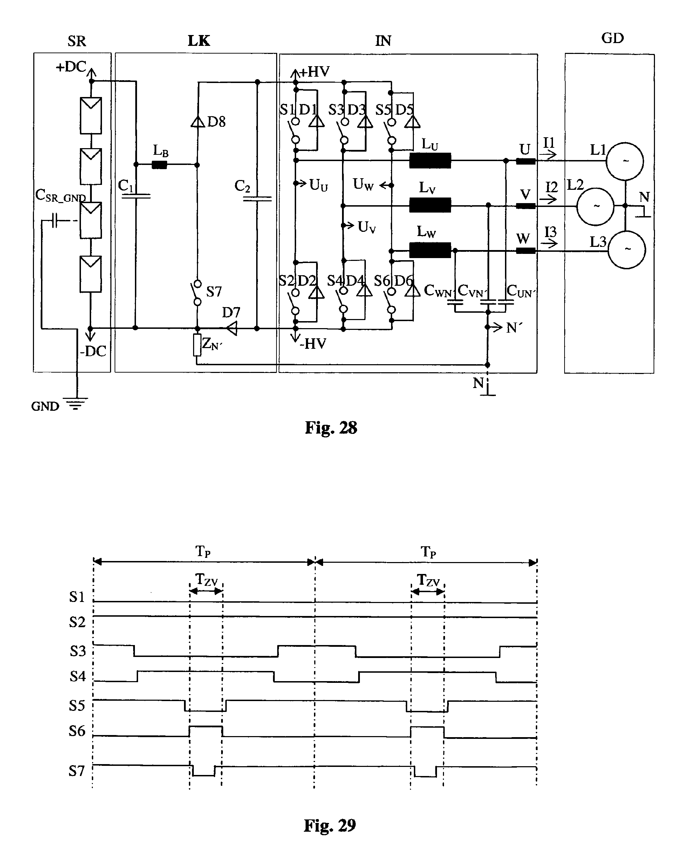

Fig. 28 zeigt eine Schaltungsanordnung mit synchron schaltendem Spannungshochsetzsteller. Der Spannungshochsetzsteller arbeitet hier mit derselben Trägerfrequenz wie die Wechselrichterleistungsstufe. Eingesetzt werden kann diese Schaltungsanordnung, wenn die Auszeit für den Schalter S7 kürzer ist, als die Länge des Nullspannungsvektors, hier des Nullspannungsvektors V8 der Leistungsstufe S1 bis S6 des 3-phasigen Wechselrichter IN. Wie bekannt entspricht die relative Auszeit $(T_{AUS}/(T_{AUS}+T_{EIN}))$ für den Schalter des Spannungshochsetzstellers dem Verhältnis von Eingangszu Ausgangsspannung $(V_{IN}/V_{OUT})$, also dem Verhältnis zwischen der Solargeneratorspannung und der Zwischenkreisspannung des Wechselrichters. Das relative Verhältnis zwischen Länge des Nullvektors zur Periodendauer der PWM der Wechselrichterleistungsstufe muss also etwas größer sein als die relative Auszeit für Schalter S7. Das heißt, die Zwischenkreisspannung sollte vielfach höher sein als die Ausgangsspannung des Solargenerators SR, wie z.B. in der Praxis bei einem Solar-Modulwechselrichter, wenn das Verhältnis zwischen Zwischenkreisspannung zu Wechselrichterausgangsspannung nicht ungünstig groß werden soll. Der Minuspol -DC der Quelle SR hat quasi Erdleiterpotenzial GND. Optional könnte er über eine Impedanz $Z_{N'}$, z.B. einer Kapazität zur weiteren Reduktion der Ableitströme mit dem Sternpunkt der Filterkapazitäten $C_{UN'}$, $C_{VN'}$, $C_{WN}$, also dem Nachgebildeten Neutralleiter N', verbunden werden, welcher wiederum optional mit dem Neutralleiter N verbunden werden könnte. Falls N' und N nicht verbunden sind, könnte der Minuspol -DC auch direkt mit dem Nachgebildeten Neutralleiter N' verbunden werden.

Fig. 29 zeigt beispielhaft die Schaltsequenz für die Schalter der Schaltungsanordnung in Fig. 28. Im V8 Nullspannungsvektor der Leistungsstufe S1 bis S6 des Wechselrichters IN wird der Spannungszwischenkreis mit der Kapazität C2 aus der Induktivität $L_B$ nachgeladen.

Fig. 30 zeigt eine Schaltungsanordnung mit der Option der Überbrückung der vorgeschlagenen Kopplung LK zwischen der Gleichspannungsquelle SR und dem Spannungszwischenkreis des Wechselrichters IN.

Die Kopplung LK kann mit den Kontakten S 16 und S 17 optional überbrückt werden. Optional ist noch ein DC/DC-Wandler zwischen der Spannungsquelle SR und der Koppelschaltung LK eingefügt, hier als Spannungshochsetzsteller BC mit den Schaltungskomponenten $L_B$, S18, D11 ausgeführt. Der Spannungshochsetzsteller kann mit einem Relaiskontakt S19 überbrückt werden, um bei genügend hoher Spannung des Solargenerators den Spannungshochsetzsteller zu überbrücken, um damit die Durchgangsverluste durch $L_B$ und D11 zu eliminieren. Alternativ kann auch nur D11 überbrückt werden, um $L_B$ weiterhin als Glättungsdrossel zu nutzen.

Fig. 31 zeigt beispielhaft eine Spannungs-Stromkennlinie für einen Solargenerator mit Solarzellen. Der Betriebspunkt maximaler Leistung, d.h. dem Produkt aus Strom $I_{DC}$ und Spannung $U_{DC}$ ist mit MPP gekennzeichnet. Punkt 1 und 2 auf der Kennlinie stellen beispielhaft Extrempunkte dar, zwischen denen der Arbeitspunkt bei Einsatz des vorgeschlagenen Verfahrens mit der Frequenz des Transports der Ladungsträgerpakete Q gemäß Fig. 2 hin und her wandert. Durch Einsatz einer genügend großen Kapazität $C_{DC}$ am Solargenerator SR, bzw. einer Glättungsdrossel $L_{DC}$ in der Solargeneratorzuleitung, kann das Wandern des Arbeitspunktes auf der Solargeneratorkennlinie minimiert oder quasi ganz eliminiert werden.

| | |
|---|---|
| $C_{DC}$ | Kapazität, die aus der Gleichspannungs- oder Gleichstrom-Quelle gespeist wird |
| $C_{IN}$ | Kapazität zur Speisung Spannungszwischenkreis des Wechselrichters |
| $C_{IN\_GND}$ | Parasitäre Kapazität zwischen dem Spannungszwischenkreis des Wechselrichters und Erde |
| CP | Fensterkomparator |
| $C_{SR\_GND}$ | Parasitäre Kapazität zwischen der Gleichspannungs- oder Gleichstrom-Quelle und Erde |
| $C_{SR\_IN}$ | Parasitäre Kapazität zwischen der Gleichspannungs- oder Gleichstrom-Quelle und dem Spannungszwischenkreis des Wechselrichters |
| $C_{SR\_N'}$ | Entkoppel-Kapazität zwischen der Gleichspannungs- oder Gleichstrom-Quelle und dem Nachgebildeten Neutralleiter |
| $C_{UN'}$ | Glättungskapazität zwischen Phase U und dem Nachgebildeten Neutralleiter |
| $C_{UV}$ | Glättungskapazität zwischen Phase U und V der Wechselrichterleistungsstufe |
| $C_{UW}$ | Glättungskapazität zwischen Phase U und W der Wechselrichterleistungsstufe |
| $C_{VN'}$ | Glättungskapazität zwischen Phase V und dem Nachgebildeten Neutralleiter |
| $C_{VW}$ | Glättungskapazität zwischen Phase V und W der Wechselrichterleistungsstufe |
| $C_{WN'}$ | Glättungskapazität zwischen Phase W und dem Nachgebildeten Neutralleiter |
| $C_1, C_2$ | Kapazitive Energiespeicher der Koppelschaltung |
| BC | Spannungshochsetzsteller |
| D1 ... D6 | Freilaufdioden der Wechselrichterleistungsstufe |
| D7 ... D10 | Dioden der Koppelschaltung |
| D11 | Diode des Spannungshochsetzstellers |
| +DC | Pluspol Quelle |
| -DC | Minuspol Quelle |
| $f_{MAINS}$ | Netzfrequenz (50/60Hz) |
| GD | Öffentliches Stromversorgungsnetz oder auch Inselnetze |
| GND | Erde, Erdpotenzial |
| +HV | Pluspol des Spannungszwischenkreises des Wechselrichters |
| -HV | Minuspol des Spannungszwischenkreises des Wechselrichters |
| HW1 / 2 | Netzhalbwellen |
| $I_{DC}$ | Ausgangsstrom der Gleichspannungs- oder Gleichstrom-Quelle z.B. eines Solargenerators |
| IN | Wechselrichter |
| I1 | Wechselrichterausgangsstrom in Netzphase L1 |
| I2 | Wechselrichterausgangsstrom in Netzphase L2 bzw. Neutralleiter N bei einphasiger Netzeinspeisung |
| I3 | Wechselrichterausgangsstrom in Netzphase L3 |
| $L_B$ | Induktivität des Spannungshochsetzstellers |
| $L_{DC}$ | Glättungsinduktivität in der Zuleitung zur Gleichspannungsquelle |
| LK | Koppelschaltung zwischen der Gleichspannungs- oder Gleichstrom-Quelle und dem Wechselrichter |
| $L_U$ | Glättungsinduktivität für die Wechsel- |

| | |
|---|---|
| | richterausgangsphase U |
| $L_V$ | Glättungsinduktivität für die Wechselrichterausgangsphase V |
| $L_W$ | Glättungsinduktivität für die Wechselrichterausgangsphase W |
| L1 | Phase L1 des öffentlichen Stromversorgungsnetzes oder eines Inselnetzes |
| L2 | Phase L2 des öffentlichen Stromversorgungsnetzes oder eines Inselnetzes |
| L3 | Phase L3 des öffentlichen Stromversorgungsnetzes oder eines Inselnetzes |
| MPP | Betriebspunkt mit maximaler Leistung eines Solargenerators mit Solarzellen |
| N | Neutralleiter des öffentlichen Stromversorgungsnetzes oder eines Inselnetzes |
| N' | Nachgebildeter Neutralleiter, z.B. aus den Netzphasen über den symmetrischen kapazitiven Spannungsteiler des Netzausgangsfilters des Wechselrichters gebildet |
| Q | Ladungsträgerpaket, Zeitintegral über einen kurzen Stromimpuls oder elektrische Ladung einer Kapazität |
| $R_L$ | Widerstand zur Vorladung der Kapazität des Spannungszwischenkreises |
| $R_G$ | Ableitwiderstand zwischen einem Pol der Gleichspannungs- oder Gleichstrom-Quelle und Erde |
| SC1 | Spannungssektor aus dem Raumzeigerdiagramm zur Darstellung des Drehfeldes eines 3-phasigen Wechselrichters unter potenzieller Verwendung der Spannungsvektoren V1, V2 sowie der Nullspannungsvektoren V7, V8 |
| SC2 | Spannungssektor aus dem Raumzeigerdiagramm zur Darstellung des Drehfeldes eines 3-phasigen Wechselrichters unter potenzieller Verwendung der Spannungsvektoren V2, V3 sowie der Nullspannungsvektoren V7, |

| | |
|---|---|
| | V8 |
| SC3 | Spannungssektor aus dem Raumzeigerdiagramm zur Darstellung des Drehfeldes eines 3-phasigen Wechselrichters unter potenzieller Verwendung der Spannungsvektoren V3, V4 sowie der Nullspannungsvektoren V7, V8 |
| SC4 | Spannungssektor aus dem Raumzeigerdiagramm zur Darstellung des Drehfeldes eines 3-phasigen Wechselrichters unter potenzieller Verwendung der Spannungsvektoren V4, V5 sowie der Nullspannungsvektoren V7, V8 |
| SC5 | Spannungssektor aus dem Raumzeigerdiagramm zur Darstellung des Drehfeldes eines 3-phasigen Wechselrichters unter potenzieller Verwendung der Spannungsvektoren V5, V6 sowie der Nullspannungsvektoren V7, V8 |
| SC6 | Spannungssektor aus dem Raumzeigerdiagramm zur Darstellung des Drehfeldes eines 3-phasigen Wechselrichters unter potenzieller Verwendung der Spannungsvektoren V6, V1 sowie der Nullspannungsvektoren V7, V8 |
| $S_{IDC}$ | Gleichstromquelle |
| SR | Gleichspannungs- oder Gleichstrom-Quelle |
| $S_{UDC}$ | Gleichspannungsquelle |
| S1.....S6 | Schalter der Wechselrichterleistungsstufe |
| S0, S7 ... S15 | Schalter der Koppelschaltung |
| S16, S17 | Schalter zur Überbrückung der Koppelschaltung |
| S18 | Schalter für den Spannungshochsetzsteller |
| S19 | Schalter zur Überbrückung des Spannungshochsetzstellers |
| $T_P$ | Periode eines Pulsweitenmodulationszyklus des Wechselrichters |

| $T_{ZV}$ | Dauer eines Nullspannungsvektors |
|---|---|
| U | Phase U der Leistungsstufe des Wechselrichters |
| $U_{DC}$ | Ausgangsspannung der Gleichspannungsquelle z.B. eines Solargenerators |
| $U_{REF}$ | Referenzspannung für den Fensterkomparator |
| $U_U$ | Getaktetes Halbbrückenpotenzial an der Glättungsinduktivität der Phase U |
| $U_V$ | Getaktetes Halbbrückenpotenzial an der Glättungsinduktivität der Phase V |
| $U_W$ | Getaktetes Halbbrückenpotenzial an der Glättungsinduktivität der Phase W |
| V | Phase V der Leistungsstufe des Wechselrichters |
| V1 ... V8 | Spannungsvektoren aufgrund der Schaltzustände der Schalter S1 ... S6 eines 3-phasigen Wechselrichter, wobei V7 und V8 Nullspannungsvektoren genannt werden |
| V11 ... V14 | Spannungsvektoren aufgrund der Schaltzustände der Schalter S1 ... S4 eines Wechselrichters mit 2 Halbbrücken, wobei V13 und V 14 Nullspannungsvektoren genannt werden |
| W | Phase W der Leistungsstufe des Wechselrichters |
| $Z_N$ | Impedanz oder Impedanz-Netzwerk mit kapazitiven und optional auch ohmschen Verhalten zwischen einem Pol der Quelle und dem Neutralleiter selbst, falls es keinen Nachgebildeten Neutralleiter gibt, wie z.B. bei einem Wechselrichter zur einphasigen Netzeinspeisung |
| $Z_{N'}$ | Impedanz oder Impedanz-Netzwerk mit kapazitiven und optional auch ohmschen Verhalten zwischen einem Pol der Quelle und dem Nachgebildeten Neutralleiter |
| $Z_X$ | Impedanz zur Strombegrenzung |

**Patentansprüche**

1. Verfahren zur Steuerung des elektrischen Potenzialverlaufs oder des Ableitstroms zwischen mindestens einem elektrischen Pol (-DC, +DC) oder Anschluss einer einen Wechselrichter (IN) speisenden Gleichspannungs- oder Gleichstrom-Quelle (SR) und Erde (GND), **dadurch gekennzeichnet, dass** der kapazitive Energiespeicher des Spannungszwischenkreises ($C_{IN}$) des Wechselrichters intermittierend aus der Quelle nachgeladen wird, wobei die Zeitbereiche für eine mögliche Nachladung in Abhängigkeit der Schaltzustände (Spannungsvektoren V1, V2, V3 ...) der Schalter (S1, S2, S3, ....) der Wechselrichterleistungsstufe bestimmt werden, und mindestens ein Pol des Spannungszwischenkreises (+HV, -HV) während dieser Nachladung über die Wechselrichterleistungsstufe mit mindestens einer Ausgangsklemme (U, V ...) des Wechselrichters verbunden bleibt.

2. Verfahren nach Anspruch 1, **dadurch gekennzeichnet, dass** der kapazitive Energiespeicher des Spannungszwischenkreises nur bei denjenigen Spannungsvektoren der Wechselrichterleistungsstufe nachgeladen wird, bei denen mindestens ein Pol des Spannungszwischenkreises (-HV, +HV) in aufeinanderfolgenden Nachladezyklen gleichbleibendes Spannungspotenzial gegen Erde hat.

3. Verfahren nach einem der vorigen Ansprüche, **dadurch gekennzeichnet, dass** nur bei Anliegen eines bestimmten Nullspannungsvektors (V7 oder V8 bzw. V13 oder V14) in der Wechselrichterleistungsstufe der kapazitive Energiespeicher des Spannungszwischenkreises des Wechselrichters aus der Quelle nachgeladen wird.

4. Verfahren nach Anspruch 1, **dadurch gekennzeichnet, dass** während bestimmter Spannungsvektoren der Wechselrichterleistungsstufe nicht nachgeladen wird, um dadurch den Ableitstrom der Quelle auf Erde zu reduzieren.

5. Verfahren nach einem der vorigen Ansprüche, **dadurch gekennzeichnet, dass** die Nachladung des kapazitiven Energiespeichers des Spannungszwischenkreises durch zyklischen Tausch von Kapazitäten (C1, C2) erfolgt, in dem der Spannungszwischenkreis des Wechselrichters mit einer durch die Quelle vorgespannten Kapazität verbunden wird, und gleichzeitig oder kurz davor von der durch die Wechselrichterleistungsstufe entspannten Kapazität getrennt wird, damit diese wiederum durch die Quelle neu vorgespannt werden kann.

6. Verfahren nach Anspruch 5, **dadurch gekenn-**

**zeichnet, dass** der Tausch der Kapazitäten bei einem Wechselrichter zur einphasigen Netzeinspeisung nur im Spannungsnulldurchgang der Grundwelle der Wechselrichterausgangsspannung erfolgt.

7. Verfahren nach einem der vorigen Ansprüche, **dadurch gekennzeichnet, dass** die Gleichspannungsquelle einen DC / DC Wandler umfasst.

8. Verfahren nach Anspruch 7, **dadurch gekennzeichnet, dass** die Gleichspannungsquelle einen Spannungshochsetzsteller umfasst.

9. Verfahren, nach einem der vorigen Ansprüche, **dadurch gekennzeichnet, dass** zwischen mindestens einem Pol der Quelle (-DC oder +DC) und dem Nachgebildeten Neutralleiter (N') bzw. dem Neutralleiter (N) selbst ein Impedanz-Netzwerk ($Z_{N'}$ bzw. $Z_N$) eingefügt ist.

10. Verfahren zur Steuerung des elektrischen Potenzialverlaufs oder des Ableitstroms zwischen mindestens einem elektrischen Pol (-DC, +DC) oder Anschluss einer einen Wechselrichter (IN) speisenden Gleichspannungs- oder Gleichstrom-Quelle (SR) und Erde (GND),
**dadurch gekennzeichnet,**
**dass** der kapazitive Energiespeicher des Spannungszwischenkreises des Wechselrichters intermittierend aus der Quelle nachgeladen wird, wobei die Zeitbereiche für eine mögliche Nachladung des Spannungszwischenkreises aus der Quelle in Abhängigkeit des Potenzialvergleichs (CP) zwischen mindestens einem elektrischen Pol (-HV, +HV) des Spannungszwischenkreises des Wechselrichters und Erde (GND) bestimmt werden, und eine Nachladung nur ermöglicht wird, wenn der Potenzialvergleich einem vorbestimmten Spannungswert ($U_{REF}$) oder Spannungswertebereich entspricht.

11. Schaltungsanordnung zur Steuerung des elektrischen Potenzialverlaufs oder des Ableitstroms zwischen mindestens einem elektrischen Pol (-DC, +DC) oder Anschluss einer einen Wechselrichter (IN) speisenden Gleichspannungs- oder Gleichstrom-Quelle (SR) und Erde (GND),
**dadurch gekennzeichnet,**
**Dass** der kapazitive Energiespeicher des Spannungszwischenkreises ($C_{IN}$) des Wechselrichters intermittierend über elektrische Schalter (S7 ...) oder elektrische Schalter und Dioden (D7 ...) aus der Quelle nachgeladen wird, wobei die Ansteuerung des oder dieser elektrischen Schalter in Abhängigkeit der Schaltzustände (Spannungsvektoren V1, V2, V3 ...) der Schalter (S1, S2, S3 ...) der Wechselrichterleistungsstufe erfolgt, und mindestens ein Pol des Spannungszwischenkreises (+HV, -HV) während dieser Nachladung über die Wechselrichterleistungsstufe mit mindestens einer Ausgangsklemme (U, V ...) des Wechselrichters verbunden bleibt.

12. Schaltungsanordnung nach Anspruch 11, **dadurch gekennzeichnet, dass** die Schaltungsanordnung zwei Kapazitäten (C1, C2), bestehend aus jeweils mindestens einem Kondensator, umfasst, wovon eine durch die Quelle nachgeladen werden kann auch während die andere den Spannungszwischenkreis des Wechselrichters speist.

13. Schaltungsanordnung nach Anspruch 12, **dadurch gekennzeichnet, dass** eine Kapazität fest mit der Quelle, die andere fest mit dem Spannungszwischenkreis des Wechselrichters verbunden ist, und Pole gleicher Polarität der beiden Kapazitäten über Schalter oder Schalter und Dioden leitend verbunden werden können.

14. Schaltungsanordnung nach Anspruch 12, **dadurch gekennzeichnet, dass** die Kapazitäten jeweils über Schalter oder Schalter und Dioden von der Quelle und dem Wechselrichter elektrisch getrennt, und gegenseitig zyklisch ausgetauscht werden können.

15. Schaltungsanordnung nach einem der Ansprüche 11 bis 14, **dadurch gekennzeichnet, dass** zwischen mindestens einem Pol der Quelle (-DC oder +DC) und dem Nachgebildeten Neutralleiter (N') bzw. dem Neutralleiter (N) selbst ein Impedanz-Netzwerk ($Z_{N'}$ bzw. $Z_N$) eingefügt ist.

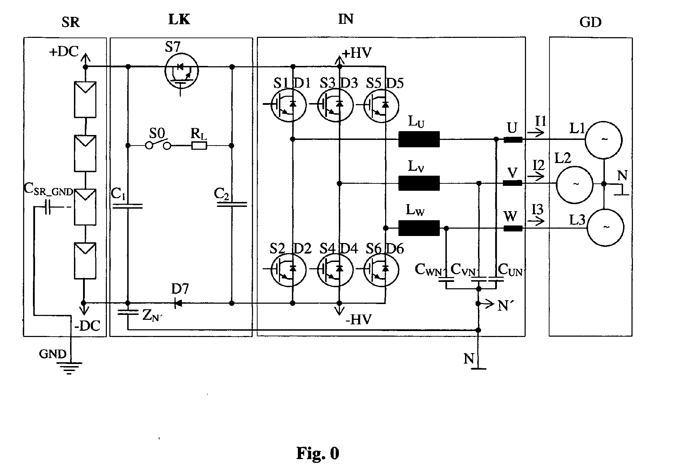

**Fig. 0**

**Fig. 1**

**Fig. 2**

Fig. 3

**Fig. 4**

**Fig. 5**

**Fig. 6**

**V11**

**V12**

**V13**

**V14**

Fig. 7

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

**Fig. 21**

**Fig. 22**

**Fig. 23**

**Fig. 24**

**Fig. 25**

**Fig. 26**

**Fig. 27**

**Fig. 28**

**Fig. 29**

**Fig. 30**

**Fig. 31**

Europäisches
Patentamt

European
Patent Office

Office européen
des brevets

**EUROPÄISCHER RECHERCHENBERICHT**

**Nummer der Anmeldung**

EP 09 01 5465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | WO 2010/034413 A1 (FRAUNHOFER GES FORSCHUNG [DE]; BURGER BRUNO [DE]; SCHMIDT HERIBERT [DE] 1. April 2010 (2010-04-01) * Seiten 1-8, Seite 15 Zeilen 9-13 und 35-38, Figuren 11 und 13 * ----- | 10 | INV. H02M7/5387 H02J5/00 |
| A | DE 10 2007 028078 A1 (SMA SOLAR TECHNOLOGY AG [DE]) 24. Dezember 2008 (2008-12-24) * Absätze [0005], [0008], [0013], [0023], [0026], [0028], [0030], [0032]; Abbildung 1 * ----- | 1-15 | |
| A | JP 11 235024 A (SANYO ELECTRIC CO) 27. August 1999 (1999-08-27) * Zusammenfassung; Abbildung 1 * ----- | 1-15 | |
| A | WO 2008/015298 A1 (INGETEAM S A [ES]; GONZALEZ SENOSIAIN ROBERTO [ES]; COLOMA CALAHORRA J) 7. Februar 2008 (2008-02-07) * Abbildung 1 * ----- | 1-15 | |
| A | EP 1 369 985 A2 (FRAUNHOFER GES FORSCHUNG [DE]) 10. Dezember 2003 (2003-12-10) * Zusammenfassung; Abbildung 1 * ----- | 1-15 | RECHERCHIERTE SACHGEBIETE (IPC) H02M H02J |
| A | DE 10 2004 030912 B3 (SMA TECHNOLOGIE AG [DE]) 19. Januar 2006 (2006-01-19) * Zusammenfassung; Abbildung 1 * ----- | 1-15 | |

Der vorliegende Recherchenbericht wurde für alle Patentansprüche erstellt

| Recherchenort | Abschlußdatum der Recherche | Prüfer |
|---|---|---|
| München | 26. Juli 2010 | Hanisch, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 01 5465

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-07-2010

| Im Recherchenbericht angeführtes Patentdokument | Datum der Veröffentlichung | Mitglied(er) der Patentfamilie | Datum der Veröffentlichung |
|---|---|---|---|
| WO 2010034413 A1 | 01-04-2010 | DE 102008048841 B3 | 28-01-2010 |
| DE 102007028078 A1 | 24-12-2008 | CN 101682194 A<br>WO 2009010025 A1<br>EP 2067230 A1<br>KR 20090052376 A<br>US 2009201706 A1 | 24-03-2010<br>22-01-2009<br>10-06-2009<br>25-05-2009<br>13-08-2009 |
| JP 11235024 A | 27-08-1999 | JP 3520961 B2 | 19-04-2004 |
| WO 2008015298 A1 | 07-02-2008 | EP 2053730 A1<br>US 2009316458 A1 | 29-04-2009<br>24-12-2009 |
| EP 1369985 A2 | 10-12-2003 | AT 431640 T<br>DE 10221592 A1<br>EP 2086102 A2<br>ES 2326966 T3 | 15-05-2009<br>04-12-2003<br>05-08-2009<br>22-10-2009 |
| DE 102004030912 B3 | 19-01-2006 | CN 1713503 A<br>EP 1626494 A2<br>HK 1084248 A1<br>JP 4258739 B2<br>JP 2006014591 A<br>US 2005286281 A1 | 28-12-2005<br>15-02-2006<br>19-06-2009<br>30-04-2009<br>12-01-2006<br>29-12-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10221592 A1
- DE 102004030912 B3
- DE 102004037446 A1
- DE 10225020 A1
- DE 19732218 C1

**In der Beschreibung aufgeführte Nicht-Patentliteratur**

- *Fachzeitschrift Photon veröffentlicht,* Marz 2007, 80-108